# EUROPEAN PATENT SPECIFICATION

(11) **EP 1 986 258 B1**
(45) Date of publication and mention of the grant of the patent: **07.08.2013**
(21) Application number: 07714392.3
(22) Date of filing: 16.02.2007
(51) Int. Cl.: H01M 8/24

(54) **FILM-CATALYST LAYER ASSEMBLY, FILM-ELECTRODE ASSEMBLY, AND POLYMER ELECTROLYTE TYPE FUEL CELL**
FILMKATALYSATOR-SCHICHTBAUGRUPPE, FILMELEKTRODENBAUGRUPPE UND BRENNSTOFFZELLE DES POLYMERELEKTROLYTTYPS
ENSEMBLE FILM-COUCHES CATALYTIQUES, ENSEMBLE FILM-ELECTRODE ET PILE À COMBUSTIBLE DU TYPE À ELECTROLYTE POLYMÈRE

(30) Priority: 16.02.2006 JP 2006039429
(43) Date of publication of application: 29.10.2008
(73) Proprietor: Panasonic Corporation, Kadoma-shi Osaka 571-8501 (JP)
(72) Inventor: GEMBA, Miho, 2-1-61, Shiromi, Chuo-ku, Osaka 540-6207, (JP); TSUJI, Yoichiro,, 2-1-61, Shiromi, Chuo-ku, Osaka 540-6207, (JP); KOSAKO, Shinya,, 2-1-61, Shiromi, Chuo-ku, Osaka 540-6207, (JP)
(74) Representative: Leinweber & Zimmermann
(86) International application number: PCT/JP2007/052862
(87) International publication number: WO 2007/094459

(56) References cited:
- WO-A2-2005/048382
- JP-A- 7 201 346
- JP-A- 05 021 077
- JP-A- 07 220 742
- JP-A- 10 154 521
- JP-A- 10 172 587

## Description

### Technical Field

The present invention relates to a catalyst-coated membrane, a membrane-electrode assembly and a polymer electrolyte fuel cell.

### Background Art

A fuel cell which uses a polymer electrolyte membrane having positive ion (hydrogen ion) conductivity causes a fuel gas containing hydrogen and an oxidizing gas containing oxygen, such as air, to electrochemically react with each other to simultaneously generate electric power and heat.

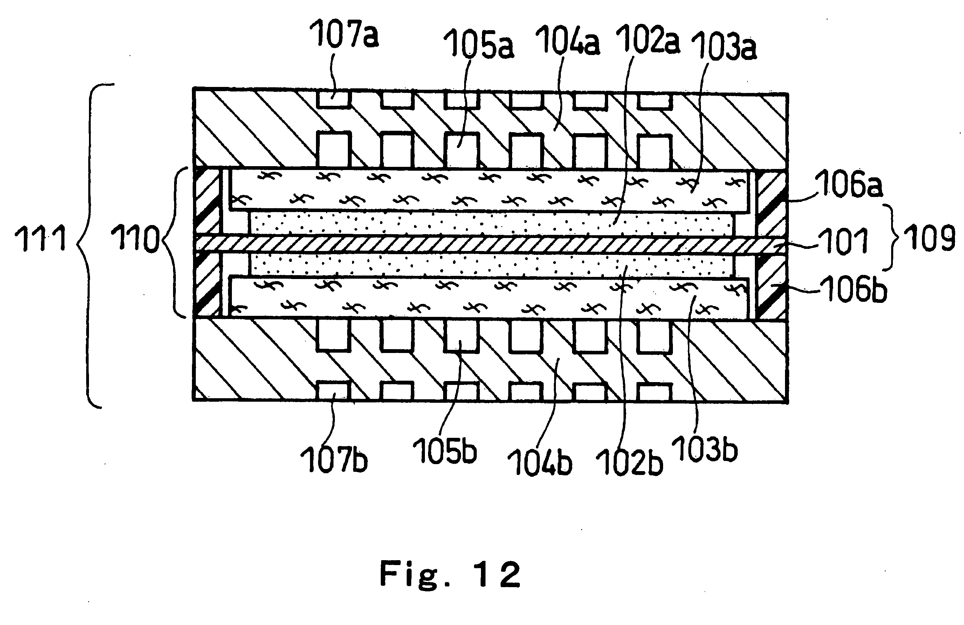

Fig. 12 is a schematic cross-sectional view showing one example of a basic configuration of a unit cell mounted on a conventional polymer electrolyte fuel cell. As shown in Fig. 12, a unit cell 111 mounted on the conventional polymer electrolyte fuel cell includes a membrane-electrode assembly 110 in which a catalyst layer 102a and a catalyst layer 102b each configured to contain a mixture of conductive particles (carbon particles for example) supporting an electrode catalyst (for example, a precious metal catalyst, such as a platinum metal) and a polymer electrolyte having hydrogen ion conductivity are formed on both surfaces, respectively, of a polymer electrolyte membrane 101 which selectively transports hydrogen ions.

Gas diffusion layers 103a and 103b are disposed on an outer side of the catalyst layer 102a and an outer side of the catalyst layer 102b, respectively. The catalyst layer 102a and the gas diffusion layer 103a constitute a gas diffusion electrode {anode (fuel electrode) or cathode (oxidizing agent electrode)}, and the catalyst layer 102b and the gas diffusion layer 103b constitute a gas diffusion electrode {cathode (oxidizing agent electrode) or anode (fuel electrode)}.

Moreover, in the conventional unit cell 111 shown in Fig. 12, in order to prevent the fuel gas and the oxidizing gas to be supplied to the gas diffusion electrodes from leaking outside and to prevent the above two types of gases from mixing with each other, gaskets 106a and 106b are disposed around the gas diffusion electrodes, respectively, so as to sandwich the polymer electrolyte membrane 101. The gaskets 106a and 106b may be assembled integrally with the gas diffusion electrodes and the polymer electrolyte membrane 101, and the obtained structure may be called a membrane-electrode assembly.

Moreover, as shown in Fig. 12, the unit cell 111 includes plate-like separators 104a and 104b which have electrical conductivity and are disposed to mechanically fasten and electrically connect a plurality of adjacent unit cells. Gas passages 105a and 105b each of which is used to supply a reactant gas (the fuel gas or the oxidizing gas) and to carry away a generated gas or an excess gas are formed on main surfaces, respectively, of the separators 104a and 104b which surfaces contact the gas diffusion layers 103a and 103b, respectively, of the gas diffusion electrodes.

Each of the gas passages 105a and 105b is typically a so-called serpentine gas passage having a serpentine groove constructed of a plurality of straight grooves and turned grooves (curved grooves) each of which couples adjacent straight grooves with each other.

More specifically, the serpentine gas passage is formed as below. That is, adjacent two straight grooves and one turned groove which couples these two straight grooves with each other are arranged such that: a downstream end of an upstream straight groove of the two straight grooves and an upstream end of the turned groove are connected to each other; and a downstream end of the turned groove and an upstream end of a downstream straight groove of the two straight grooves are connected to each other. Then, a downstream end of the downstream straight groove of the two straight grooves is connected to an upstream end of another turned groove formed on a further downstream side. Thus, a plurality of the straight grooves and a plurality of turned grooves are sequentially coupled with each other as above from upstream to downstream to form one gas passage (serpentine gas passage) having a serpentine shape.

As the serpentine gas passage, there is a type which is constructed of the above-described one serpentine groove, and there is a type which is constructed of a plurality of the serpentine grooves. The grooves forming the serpentine gas passage may be arranged to be equally spaced apart or may be arranged to be unequally spaced apart.

The gas passages 105a and 105b may be formed independently from the separators 104a and 104b, however, the gas passages 105a and 105b are typically formed by forming grooves on the separators 104a and 104b.

Further, the membrane-electrode assembly 110 generates heat at the time of electric power generation. Therefore, in order to maintain the temperature of the membrane-electrode assembly 110 at an allowable operating temperature, a cooling fluid, such as cooling water, is supplied to remove surplus heat. On this account, a cooling fluid passage 107a or 107b is typically formed on a surface of at least one of the separators 104a and 104b which surface is opposite a surface on which the gas passage 105a or 105b is formed, and the cooling fluid, such as the cooling water, is supplied to the cooling fluid passage 107a or 107b.

Each of the cooling fluid passages 107a and 107b is typically a serpentine cooling fluid passage which is constructed of a plurality of straight grooves and turned grooves (curved grooves) each of which couples ends of adjacent straight grooves with each other from upstream to downstream, and these grooves are typically formed to be equally spaced apart. Moreover, each of the cooling fluid passages 107a and 107b may be constructed of a plurality of straight grooves which are substantially in parallel with each other. Also, these grooves are typically formed to be equally spaced apart from each other.

An electrode reaction proceeding at the cathode (oxidizing agent electrode) of the above polymer electrolyte fuel cell and an electrode reaction proceeding at the anode (fuel electrode) of the above polymer electrolyte fuel cell are as below.

Anode: 2H₂ → 4H⁺ + 4e⁻ (1)

Cathode: 4H⁺ + 4e⁻ + O₂ → 2H₂O (2)

Then, the hydrogen ions generated at the anode by the reaction shown by Reaction Formula (1) penetrate (diffuse in) the polymer electrolyte membrane 101 in a hydration state of H⁺(ₓH₂O) to reach the cathode, and the reaction shown by Reaction Formula (2) proceeds. Note that the anode is supplied with hydrogen (gas) necessary for the reaction, and the cathode is supplied with oxygen (gas) necessary for the reaction.

In order to put the polymer electrolyte fuel cell into practical use, it is important to improve the durability of the membrane-electrode assembly 110 or the durability of a catalyst-coated membrane (assembly of the catalyst layers 102a and 102b and the polymer electrolyte membrane 101) included in the membrane-electrode assembly 110. This has been studied variously.

For example, in order to improve the durability, Patent Document 1 proposes "a fuel cell (polymer electrolyte fuel cell) including between a polymer electrolyte membrane and an electrode, a catalyst layer made of electrically-conductive particles supporting catalysts, and a fire-resistant layer formed by spreading fire-resistant particles on a catalyst adjacent region which surrounds an outer peripheral edge of the catalyst layer and partitions a region where the catalyst layer occupies".
Patent Document 1: Japanese Laid-Open Patent Application Publication HEI 7-201346

### Disclosure of the Invention

### Problems to be Solved by the Invention

However, even in the case of the prior art described in Patent Document 1, the progress of deterioration (mechanical damage and chemical deterioration) of the polymer electrolyte membrane cannot be prevented adequately. Thus, there is still room for improvement.

The present invention was made to solve the above problems, and an object of the present invention is to provide a catalyst-coated membrane having excellent durability.

Another object of the present invention is to provide a membrane-electrode assembly including the catalyst-coated membrane of the present invention and having excellent durability.

Still another object of the present invention is to provide a polymer electrolyte fuel cell including the catalyst-coated membrane of the present invention or the membrane-electrode assembly of the present invention and having excellent durability.

### Means for Solving the Problems

To achieve this object, the invention proposes a catalyst-coated membrane according to claim 1. Namely, as a result of diligent studies for the purpose of solving the above problems, the present inventors have obtained the following findings. To be specific, the present inventors have found that slight displacement (displacement when viewed from a substantially normal direction of the main surface of the above-described polymer electrolyte membrane) between the catalyst layer of the anode and the catalyst layer of the cathode is generated due to erection tolerance, and the displacement causes the deterioration of an outer peripheral portion of the catalyst layers of the polymer electrolyte membrane.

More specifically, originally, the reactions shown by Reaction Formulas (1) and (2) occur in the catalyst layer of the anode and the catalyst layer of the cathode, respectively, and only H⁺ passes through the polymer electrolyte membrane.

However, if an oxygen gas or hydrogen gas dissolved in water cross-leaks such that the gases pass through the polymer electrolyte membrane from a counter electrode, a combustion reaction shown by Reaction Formula (3) below occurs competitively as a side reaction with respect to the reaction shown by Reaction Formula (1) or (2). Since the reaction shown by Reaction Formula (3) is an exothermic reaction, it deteriorates the polymer electrolyte membrane with heat.

2H₂ + O₂ → 2H₂O (3)

Moreover, it is thought that the deterioration of the polymer electrolyte membrane is caused by hydroxyl radical generated from hydrogen peroxide generated by a redox side reaction, as shown by Reaction Formula (7) below.

H₂ + O₂ → H₂O₂ (7)

Here, it is found that a cross leakage amount of the reactant gas is greatly related to the existence of the catalyst layer of the counter electrode. Since the reaction shown by Reaction Formula (1) or (2) occurs at a portion where the catalyst layer exists, the hydrogen gas and the oxygen gas are consumed, so that the amount of the reactant gases which do not react in the electrodes in which the electrode reactions should occur, pass through the polymer electrolyte membrane, and cross leak to the opposite electrode is small.

However, since the reaction shown by Reaction Formula (1) or (2) does not occur at a portion where the catalyst layer does not exist, the concentration of the hydrogen gas and the concentration of the oxygen gas increase, so that the cross leakage amount of the reactant gases increases in proportion to those partial pressures.

As a result of further studies, it is found that, as described above, the slight displacement (displacement when viewed from the substantially normal direction of the main surface of the polymer electrolyte membrane) between the catalyst layer of the anode and the catalyst layer of the cathode is generated due to the erection tolerance, and a portion on the polymer electrolyte membrane on which portion the catalyst layer of the anode or the catalyst layer of the cathode does not exist is formed due to the displacement.

Then, it is found that the amount of gas cross-leaking from a side on which the catalyst layer does not exist increases, and the polymer electrolyte membrane deteriorates due to formation heat generated by the reaction shown by Reaction Formula (3) in the catalyst layer of the counter electrode, peroxide such as hydrogen peroxide generated by the reaction shown by Reaction Formula (7), and reactive oxygen species such as radical containing as a constituent element, oxygen generated from, for example, the peroxide. Then, it is extremely difficult to eliminate the erection tolerance in light of steps of actually manufacturing the polymer electrolyte fuel cell.

As a result of diligent studies by the present inventors by focusing on the fact that it is extremely difficult to eliminate the erection tolerance based on the above findings, it is found that the followings are very effective to achieve the above objects: the area (size) of the main surface of one of the catalyst layers and the area (size) of the main surface of the other catalyst layer are differed intentionally; a below-described membrane catalyst concentration reduced region {This region includes at least two regions that are a portion (first portion) which contacts one (first main surface) of the main surfaces of the polymer electrolyte membrane and a remaining portion (second portion) other than the first portion. The first portion does not contain the catalyst. Moreover, even if the first portion contains the catalyst, the amount (concentration) of the catalyst is set such that the catalyst does not act with respect to the reactions shown by Reaction Formulas (3) and (7) of the reactant gases. Alternatively, the amount (concentration) of the catalyst is set such that even if the catalyst acts with respect to the reactions shown by Reaction Formulas (3) and (7) of the reactant gases, the reaction heat generated by the reactions does not deteriorate the polymer electrolyte membrane. The second portion contains the catalyst at a concentration that is lower than the concentration of the catalyst contained in the catalyst layer.} is formed around an outer periphery of the catalyst layer having the smaller main surface; the reactions shown by Reaction Formulas (3) and (7) of the reactant gases are caused at a portion of the membrane catalyst concentration reduced region which portion is far from the polymer electrolyte membrane; and the reactions shown by Reaction Formulas (3) and (7) of the reactant gases are suppressed at a portion (portion close to the polymer electrolyte membrane) of the membrane catalyst concentration reduced region which portion contacts the polymer electrolyte membrane. Thus, the present invention has been achieved.

To be specific, the present invention provides a catalyst-coated membrane comprising at least: a first catalyst layer and a second catalyst layer which are opposed to each other; a polymer electrolyte membrane which is disposed between the first catalyst layer and the second catalyst layer, has a first main surface and a second main surface which are opposed to each other, and is disposed such that the first main surface contacts one of main surfaces of the first catalyst layer and the second main surface contacts one of main surfaces of the second catalyst layer; and a membrane catalyst concentration reduced region which is formed to contact an outer periphery of the first catalyst layer and the first main surface of the polymer electrolyte membrane and has hydrogen ion conductivity and fire resistance, wherein: an outer periphery of the main surfaces of the second catalyst layer is located between an edge of the membrane catalyst concentration reduced region which edge contacts the first catalyst layer and an edge opposed to the edge contacting the first catalyst layer; and the membrane catalyst concentration reduced region includes a first portion which contacts the first main surface of the polymer electrolyte membrane and has the hydrogen ion conductivity and the fire resistance and a second portion which is a remaining portion other than the first portion, has the hydrogen ion conductivity and the fire resistance, and contains a catalyst.

In accordance with this configuration, the excellent durability of the catalyst-coated membrane can be realized by the following mechanism.

That is, as described above, during the operation of the polymer electrolyte fuel cell, the reactant gas flowing in the second catalyst layer may cross-leaks in the polymer electrolyte membrane toward the first catalyst layer side from a portion of the polymer electrolyte membrane which portion is on the second catalyst layer side and on which portion the second catalyst layer is not disposed.

In such case, the reactant gas having reached the first catalyst layer side by the cross leakage reaches the first portion of the membrane catalyst concentration reduced region which portion contacts the polymer electrolyte membrane. Since the first portion does not contain the catalyst, the cross-leaked reactant gas does not cause the combustion reaction shown by Reaction Formula (3) or the reaction shown by Reaction Formula (7), and reaches the second portion. The reactant gas having reached the second portion causes the reaction shown by Reaction Formula (3) or (7).

Since these reactions occur at the second portion which does not directly contact the polymer electrolyte membrane but contacts the polymer electrolyte membrane via the first portion of the membrane catalyst concentration reduced region, it is possible to suppress the deterioration caused due to the heat of the polymer electrolyte membrane and due to the reactive oxygen species, such as hydrogen peroxide.

Since the membrane catalyst concentration reduced region has the hydrogen ion conductivity, it does not hinder the movement of H⁺ necessary for the reactions shown by Reaction Formulas (1) and (2), when viewed from the substantially normal direction of the main surface of the polymer electrolyte membrane. Therefore, the membrane catalyst concentration reduced region does not hinder the electric power generation of the polymer electrolyte fuel cell, and the second portion of the membrane catalyst concentration reduced region can be used as a catalyst layer. On this account, the polymer electrolyte fuel cell mounting the catalyst-coated membrane according to the present invention is space-saving and can efficiently generate electric power.

Moreover, since it is unnecessary to completely cause the position of the first catalyst layer and the position of the second catalyst layer to conform to each other, the catalyst-coated membrane can be manufactured easily, and the productivity of the catalyst-coated membrane improves.

Moreover, in the catalyst-coated membrane according to the present invention, the first portion may contain such an amount of the catalyst that the catalyst does not act with respect to a reaction of a reactant gas having flowed into the first portion, or that even if the catalyst acts with respect to the reaction of the reactant gas, reaction heat generated by the reaction does not deteriorate the polymer electrolyte membrane; and a catalyst concentration of the first portion may be lower than a catalyst concentration of the second portion and a catalyst concentration of the first catalyst layer.

As above, even if the first portion of the membrane catalyst concentration reduced region slightly contains the catalyst, the reactions shown by Reaction Formulas (3) and (7) caused in the first portion due to the cross-leaked reactant gas are adequately suppressed, since the catalyst concentration with respect to the reactions shown by Reaction Formulas (3) and (7) is essentially zero. The cross-leaked reactant gas reaches the second portion without almost causing the reactions shown by Reaction Formulas (3) and (7) in the first portion. The reactant gas having reached the second portion causes the reaction shown by Reaction Formula (3) or (7) at the second portion which is far from the polymer electrolyte membrane. Thus, the reactant gas is consumed. Therefore, the deterioration due to the heat of the polymer electrolyte membrane and the deterioration due to the reactive oxygen species, such as hydrogen peroxide, can be adequately suppressed.

Moreover, in the catalyst-coated membrane according to the present invention, the membrane catalyst concentration reduced region may be formed such that a catalyst concentration thereof becomes lower from a portion far from the first main surface of the polymer electrolyte membrane to a portion close to the first main surface.

For example, in a case where the first portion does not contain the catalyst, the second portion may be formed such that the catalyst concentration becomes lower from a portion far from the first main surface of the polymer electrolyte membrane to a portion close to the first main surface. Moreover, for example, in a case where the first portion contains the catalyst (in the above-described case where the catalyst concentration is essentially zero), the second portion may be formed such that the catalyst concentration becomes lower from the portion far from the first main surface of the polymer electrolyte membrane to the portion close to the first main surface.

Even in any of the above cases, the cross-leaking reactant gas can be consumed in such a manner that the reactions shown by Reaction Formulas (3) and (7) are not caused at the first portion that is close to the polymer electrolyte membrane, and the reactions shown by Reaction Formulas (3) and (7) are caused at the second portion that is far from the polymer electrolyte membrane.

Moreover, in the catalyst-coated membrane according to the present invention, the first portion may be constructed of a fire-resistant proton conductive layer which contacts and extend along the first main surface of the polymer electrolyte membrane; and the second portion may be constructed of an additional portion which contains at least a constituent material that is the same as a constituent material contained in the first catalyst layer, is continuous with the first catalyst layer, extends in a layer shape to cover the fire-resistant proton conductive layer, and is added to the first catalyst layer. One specific example of this case is that electron-conductive carbon not supporting the catalyst is used as the constituent material of the first portion, and carbon (for example, electron-conductive carbon having high degree of crystallinity), as a carrier of the catalyst, having higher heat resistance than the carbon used as the constituent material of the first portion is adopted as the constituent material of the second portion at which the reaction heat is generated, in order that the second portion has the same catalyst function as the catalyst layer and has excellent fire resistance (heat resistance).

Moreover, in the catalyst-coated membrane according to the present invention, the membrane catalyst concentration reduced region may contain as constituent materials, polymer electrolyte having the hydrogen ion conductivity and inorganic particles having the fire resistance (heat resistance). The inorganic particle is not especially limited as long as it has the fire resistance (heat resistance). It is preferable that the inorganic particle be a particle which is chemically stable under an operating condition (operating temperature of 0°C to 120°C) of the polymer electrolyte fuel cell, and does not generate chemical species which decompose the polymer electrolyte. For example, the inorganic particle may be a particle containing metal as the constituent material or may be a particle containing non-metal as the constituent material. One example of a non-metallic material is ceramics {non-metal inorganic solid material manufactured by a heat treatment (note that a metallic element may be contained as a constituent element)}. Examples of the ceramics are metallic oxide, non-metallic oxide (below-described silicon oxide and the like), non-metallic compound (non-metal carbide, non-metal nitride and the like), and metallic non-metallic compound (metal carbide, metal nitride and the like).

Further, the inorganic particle may be a particle containing as a constituent material at least one type of inorganic solid material selected from a group consisting of carbon and silica. Of course, only the particle containing carbon as the constituent material may be adopted as the inorganic particle, or only the particle containing silica as the constituent material may be adopted as the inorganic particle.

As the above-described carbon particle, a crystallized carbon particle having oxidation resistance may be used. In such case, the crystallized carbon particle may be a graphitized particle having the electron conductivity. In this case, the electron conductivity can be given to at least a part of the membrane catalyst concentration reduced region. Moreover, the crystallized carbon particle may be a particle (particle belonging to the ceramics) of highly pure monocrystal carbon used for a heat dissipation insulating plate.

Moreover, the catalyst-coated membrane according to the present invention may further include a first space filling member which is disposed on the second main surface of the polymer electrolyte membrane so as to be located outside the second catalyst layer and not to overlap with the second catalyst layer, wherein when viewed from a substantially normal direction of the main surface of the polymer electrolyte membrane, an inner edge of the first space filling member may be located between the edge of the membrane catalyst concentration reduced region which edge contacts the first catalyst layer and the edge opposed to the edge contacting the first catalyst layer.

Moreover, in the catalyst-coated membrane according to the present invention, the first space filling member may contain engineering plastic as a constituent material.

Moreover, the catalyst-coated membrane according to the present invention may further include a second space filling member which is disposed on the first main surface of the polymer electrolyte membrane so as to be located outside the membrane catalyst concentration reduced region and not to overlap with the membrane catalyst concentration reduced region.

Moreover, in the catalyst-coated membrane according to the present invention, the second space filling member may contain engineering plastic as a constituent material.

Moreover, in the catalyst-coated membrane according to the present invention, the first catalyst layer may be a catalyst layer for an anode, and the second catalyst layer may be a catalyst layer for a cathode.

Further, in the catalyst-coated membrane according to the present invention, the first catalyst layer may be a catalyst layer for a cathode, and the second catalyst layer may be a catalyst layer for an anode.

Moreover, a membrane-electrode assembly according to the present invention may include: a pair of gas diffusion layers which are disposed to be opposed to each other; and the catalyst-coated membrane according to claim 1 disposed between the pair of gas diffusion layers.

Since the membrane-electrode assembly according to the present invention includes the catalyst-coated membrane according to the present invention, it shows excellent durability.

Moreover, a polymer electrolyte fuel cell according to the present invention may include the above membrane-electrode assembly.

Since the polymer electrolyte fuel cell according to the present invention includes the catalyst-coated membrane according to the present invention or the membrane-electrode assembly according to the present invention, it shows excellent durability.

### Effects of the Invention

The present invention can provide a catalyst-coated membrane having excellent durability. Moreover, the present invention can provide a catalyst-coated membrane for use in a polymer electrolyte fuel cell which is space-saving and can efficiently generate electric power. Further, the present invention can provide a membrane-electrode assembly having excellent durability. Furthermore, the present invention can provide a polymer electrolyte fuel cell including the catalyst-coated membrane of the present invention or the membrane-electrode assembly of the present invention and having excellent durability. In accordance with the present invention, the catalyst-coated membrane can be manufactured easily, and the productivity of the catalyst-coated membrane improves.

### Brief Description of the Drawings

[Fig. 1] Fig. 1 is a schematic cross-sectional view showing one example of a basic configuration of a unit cell mounted on a polymer electrolyte fuel cell of Embodiment 1 of the present invention.
[Fig. 2] Fig. 2 is a schematic cross-sectional view showing a basic configuration of a membrane-electrode assembly mounted of a unit cell 11 shown in Fig. 1.
[Fig. 3] Fig. 3 is a schematic cross-sectional view showing a catalyst-coated membrane constituting a membrane-electrode assembly 10 shown in Fig. 2.
[Fig. 4] Fig. 4 is a schematic cross-sectional view showing the catalyst-coated membrane constituting the membrane-electrode assembly 10 mounted on the unit cell 11 of the polymer electrolyte fuel cell of Embodiment 2 of the present invention.
[Fig. 5] Fig. 5 is a schematic cross-sectional view showing a membrane-electrode assembly 30 mounted on the unit cell 11 of the polymer electrolyte fuel cell of Embodiment 3 of the present invention.
[Fig. 6] Fig. 6 is a schematic cross-sectional view showing a membrane-electrode assembly 40 mounted on the unit cell 11 of the polymer electrolyte fuel cell of Embodiment 4 of the present invention.
[Fig. 7] Fig. 7 is a perspective view showing the catalyst-coated membrane shown in Fig. 3.
[Fig. 8] Fig. 8 is a cross-sectional view schematically showing a modification example of the catalyst-coated membrane of Embodiment 1.
[Fig. 9] Fig. 9 is a graph showing a relation between a concentration of a catalyst contained in a membrane catalyst concentration reduced region shown in Fig. 8 and a distance from a surface of the membrane catalyst concentration reduced region which surface contacts a main surface of a polymer electrolyte membrane 1.
[Fig. 10] Fig. 10 is a graph showing the relation between the concentration of the catalyst contained in the membrane catalyst concentration reduced region shown in Fig. 8 and the distance from the surface of the membrane catalyst concentration reduced region which contacts the main surface of the polymer electrolyte membrane 1.
[Fig. 11] Fig. 11 is a graph showing the relation between the concentration of the catalyst contained in the membrane catalyst concentration reduced region shown in Fig. 8 and the distance from the surface of the membrane catalyst concentration reduced region which contacts the main surface of the polymer electrolyte membrane 1.
[Fig. 12] Fig. 12 is a schematic cross-sectional view showing one example of a basic configuration of a unit cell mounted on a conventional polymer electrolyte fuel cell.

### Explanation of Reference Numbers

- 1: polymer electrolyte membrane
- 2a: first catalyst layer
- 2b: second catalyst layer
- 3a: gas diffusion layer
- 3b: gas diffusion layer
- 4a: separator
- 4b: separator
- 5a: gas passage
- 5b: gas passage
- 6a: gasket
- 6b: gasket
- 7a: cooling fluid passage
- 7b: cooling fluid passage
- 8: first portion (fire-resistant proton conductive layer)
- 9: catalyst-coated membrane
- 10: membrane-electrode assembly
- 11: unit cell
- 32: first space filling member
- 43: second space filling member
- 80: membrane catalyst concentration reduced region
- 81: second portion
- 101: polymer electrolyte membrane
- 102a: catalyst layer
- 102b: catalyst layer
- 103a: gas diffusion layer
- 103b: gas diffusion layer
- 104a: separator
- 104b: separator
- 105a: gas passage
- 105b: gas passage
- 106a: gasket
- 106b: gasket
- 107a: cooling fluid passage
- 107b: cooling fluid passage
- 109: catalyst-coated membrane
- 110: membrane-electrode assembly
- 111: unit cell

### Best Mode for Carrying Out the Invention

Hereinafter, preferred embodiments of the present invention will be explained in reference to the drawings. Note that same reference numbers are used for the same or corresponding members in the drawings, and same explanations thereof are avoided.

### Embodiment 1

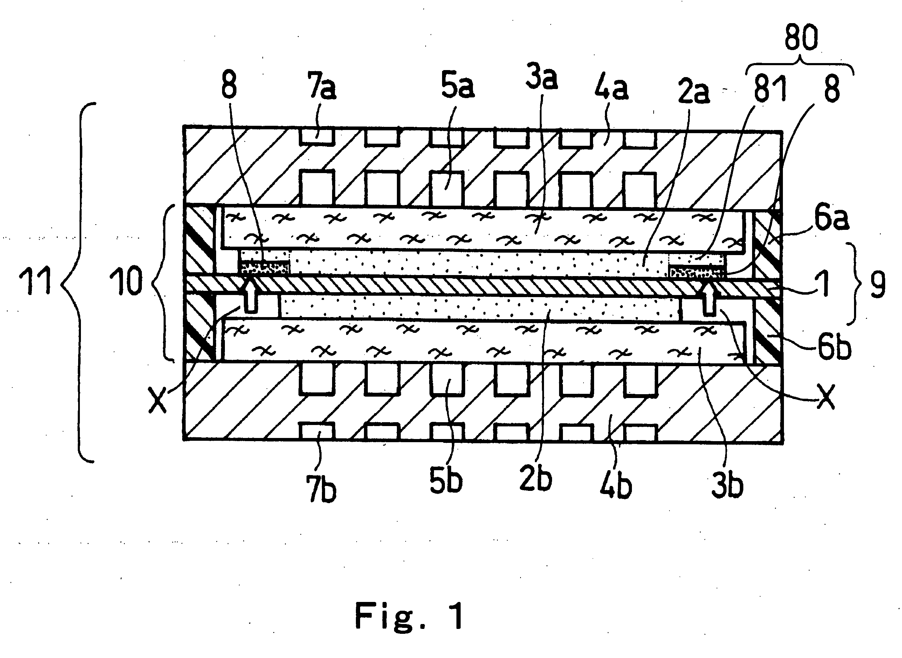

Fig. 1 is a schematic cross-sectional view showing one example of a basic configuration of a unit cell mounted on a polymer electrolyte fuel cell of one preferred embodiment of the present invention. First, components of a unit cell 11 shown in Fig. 1 will be explained.

As shown in Fig. 1, the unit cell 11 mounted on the polymer electrolyte fuel cell of the present invention includes a membrane-electrode assembly (MEA) 10 having: a polymer electrolyte membrane 1 which selectively transports hydrogen ions; and a first catalyst layer 2a and a second catalyst layer 2b which are disposed on both surfaces, respectively, of the polymer electrolyte membrane 1 and each of which is formed to contain a mixture of electrically-conductive particles (carbon particles for example) supporting an electrode catalyst (for example, a precious metal catalyst, such as a platinum metal) and a polymer electrolyte having hydrogen ion conductivity.

Moreover, gas diffusion layers 3a and 3b are disposed on an outer side of the first catalyst layer 2a and an outer side of the second catalyst layer 2b, respectively. The unit cell 11 includes a gas diffusion electrode {anode (fuel electrode)} having the first catalyst layer 2a and the gas diffusion layer 3a and a gas diffusion electrode {cathode (oxidizing agent electrode)} having the second catalyst layer 2b and the gas diffusion layer 3b.

Further, in order to prevent a fuel gas and an oxidizing gas to be supplied to the gas diffusion electrodes from leaking outside and to prevent the above two types of reactant gases from mixing with each other, the unit cell 11 shown in Fig. 1 includes gaskets 6a and 6b which are disposed around the gas diffusion electrodes, respectively, so as to sandwich the polymer electrolyte membrane 1 and each of which has, for example, an annular and substantially rectangular shape. The gaskets 6a and 6b may be assembled integrally with the gas diffusion electrodes and the polymer electrolyte membrane 1, and the obtained structure may be called a membrane-electrode assembly.

Moreover, as shown in Fig. 1, the unit cell 11 includes plate-like separators 4a and 4b which have electrical conductivity. Each of gas passages 5a and 5b each of which is used to supply the reactant gas (fuel gas or oxidizing gas) to the gas diffusion layer 3a of the anode or the gas diffusion layer 3b of the cathode and to carry away outside the membrane-electrode assembly 10 a gas containing a product generated by the electrode reaction or an unreacted reactant is formed on one surface (that is, a main surface of the separator 4a of the anode which surface contacts the membrane-electrode assembly 10 or a main surface of the separator 4b of the cathode which surface contacts the membrane-electrode assembly 10).

The configurations of the gas passages 5a and 5b are not especially limited. For example, each of the gas passages 5a and 5b may be a serpentine gas passage constructed of a plurality of straight grooves and turned grooves (curved grooves) each of which couples adjacent upstream and downstream straight grooves with each other, and the respective grooves may be formed to be equally spaced apart from each other.

As the serpentine gas passage, there is a type which is constructed of one serpentine groove, there is a type which is constructed of a plurality of the serpentine grooves. The grooves forming the serpentine gas passage may be arranged to be equally spaced apart or may be arranged to be unequally spaced apart.

Further, the membrane-electrode assembly 10 generates heat at the time of electric power generation. Therefore, in order to maintain the temperature of the membrane-electrode assembly 10 at an allowable operating temperature, a cooling fluid, such as cooling water, is supplied to remove surplus heat. On this account, the separator 4a is provided with a cooling fluid passage 7a on a surface opposite a surface on which the gas passage 5a is formed, and the separator 4b is provided with a cooling fluid passage 7b on a surface opposite a surface on which the gas passage 5b is formed.

The configurations of the cooling fluid passages 7a and 7b are not especially limited. For example, each of the cooling fluid passages 7a and 7b may be a serpentine cooling fluid passage constructed of a plurality of straight grooves and turned grooves (curved grooves) each of which couples adjacent upstream and downstream straight grooves with each other, and the respective grooves may be formed to be equally spaced apart from each other. Moreover, each of the cooling fluid passages 7a and 7b may be constructed of a plurality of straight grooves which are substantially in parallel with each other. Also, these grooves are typically formed to be equally spaced apart.

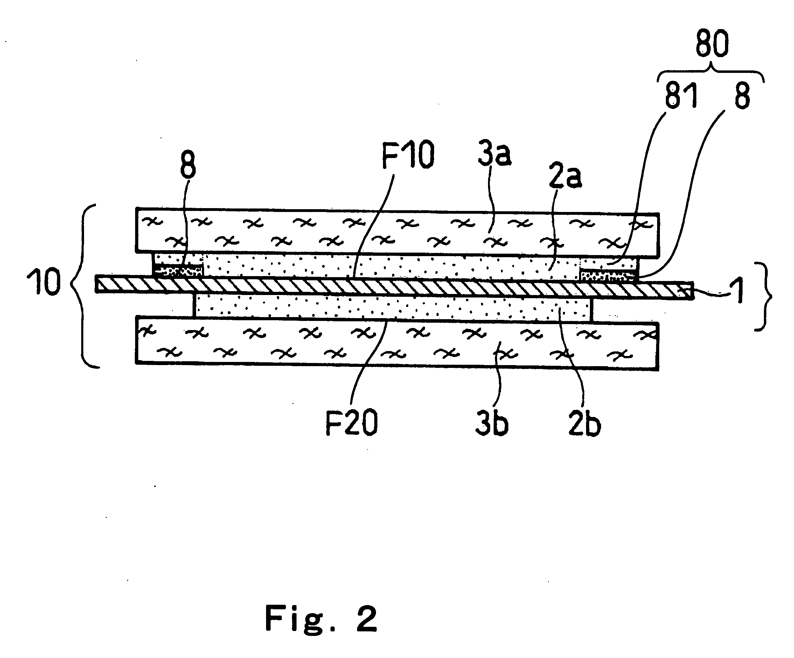

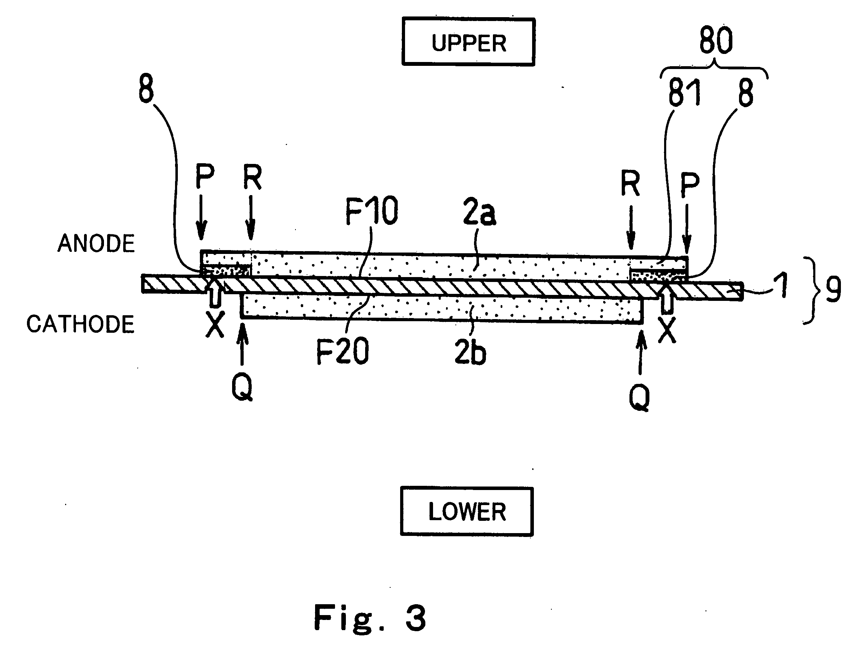

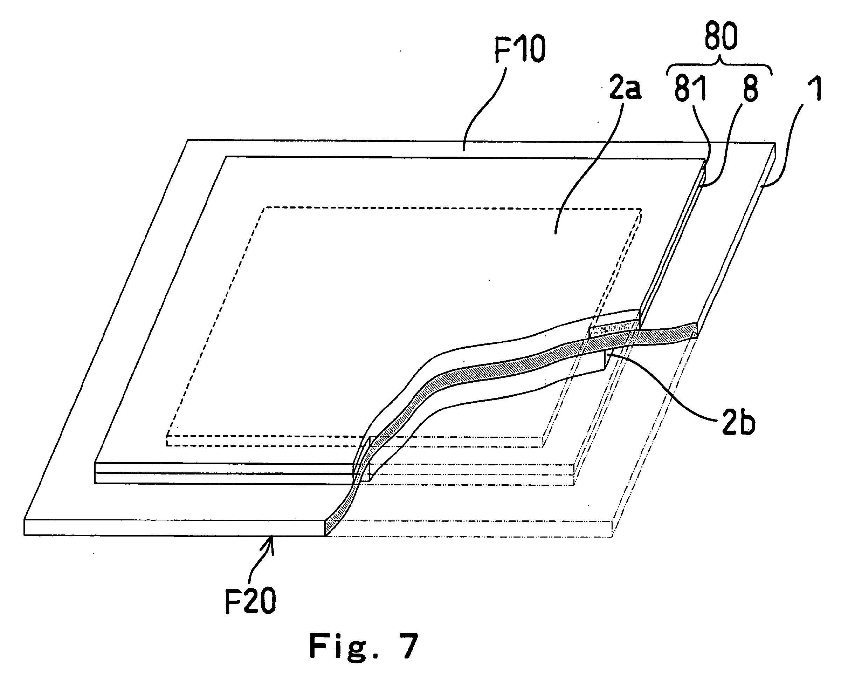

Fig. 2 is a schematic cross-sectional view of a membrane-electrode assembly of the present invention mounted on the unit cell 11 shown in Fig. 1. Fig. 3 is a schematic cross-sectional view of a catalyst-coated membrane (CCM) of the present invention mounted on the membrane-electrode assembly 10 shown in Fig. 2. Fig. 7 is a perspective view showing the catalyst-coated membrane shown in Fig. 3. In Fig. 3, a vertical direction of the catalyst-coated membrane is shown as a vertical direction of the drawing. Fig. 7 is partially cut out to show an internal structure.

As shown in Fig. 2, the membrane-electrode assembly 10 of the present embodiment includes: the gas diffusion layer 3a disposed on a surface of the first catalyst layer 2a of a catalyst-coated membrane 9 of the present invention which surface is opposite a surface contacting the polymer electrolyte membrane 1; and the gas diffusion layer 3b disposed on a surface of the second catalyst layer 2b of the catalyst-coated membrane 9 of the present invention which surface is opposite a surface contacting the polymer electrolyte membrane 1. Moreover, as shown in Fig. 3, the catalyst-coated membrane 9 of the present embodiment includes: the first catalyst layer 2a and the second catalyst layer 2b which are opposed to each other; and the polymer electrolyte membrane 1 disposed between the first catalyst layer 2a and the second catalyst layer 2b.

The catalyst-coated membrane 9 of the present invention will be explained in detail in reference to Figs. 3 and 7.

As shown in Figs. 3 and 7, the polymer electrolyte membrane 1 of the catalyst-coated membrane 9 of the present invention is formed in a substantially square shape (herein, rectangular shape) and includes a first main surface F10 and a second main surface F20 which are opposed to each other. Similarly, the first and second catalyst layers 2a and 2b have substantially square (herein, rectangular) main surfaces, respectively, which are opposed to each other. The first catalyst layer 2a is disposed on the first main surface F10 of the polymer electrolyte membrane 1 such that one main surface (lower surface) of the first catalyst layer 2a contacts the first main surface F10, and the second catalyst layer 2b is disposed on the second main surface F20 of the polymer electrolyte membrane 1 such that one main surface (upper surface) of the second catalyst layer 2b contacts the second main surface F20. The first catalyst layer 2a is formed such that when viewed from a substantially normal direction (thickness direction) of the main surface of the polymer electrolyte membrane 1, an outer periphery (portion shown by R in Fig. 3) of the first catalyst layer 2a is located inside an outer periphery (portion shown by Q in Fig. 3) of the second catalyst layer 2b.

Moreover, a membrane catalyst concentration reduced region 80 is disposed on the first main surface F10 of the polymer electrolyte membrane 1 so as to contact the outer periphery of the first catalyst layer 2a. Herein, the membrane catalyst concentration reduced region 80 is formed in an annular and substantially rectangular shape. Specifically, the membrane catalyst concentration reduced region 80 is formed to include an edge (hereinafter referred to as "inner edge") contacting the outer periphery of the first catalyst layer 2a and an edge (hereinafter referred to as "outer edge") which is opposed to the inner edge. Moreover, the membrane catalyst concentration reduced region 80 is formed such that when viewed from the substantially normal direction of the main surface of the polymer electrolyte membrane 1, the outer edge (portion shown by P in Fig. 3) of the membrane catalyst concentration reduced region 80 is located outside the outer periphery of the second catalyst layer 2b and located inside the outer periphery of the polymer electrolyte membrane 1. That is, the second catalyst layer 2b is disposed such that the outer periphery thereof is located between the inner edge and outer edge of the membrane catalyst concentration reduced region 80.

Moreover, the membrane catalyst concentration reduced region 80 includes a first portion 8 contacting the first main surface F10 of the polymer electrolyte membrane 1 and a second portion 81 that is a remaining portion. Herein, when viewed from the substantially normal direction of the main surface of the polymer electrolyte membrane 1, the membrane catalyst concentration reduced region 80 is formed to have a two-layer structure including the first portion 8 and the second portion 81.

The first portion 8 is formed of a fire-resistant proton conductive layer 8 constructed of inorganic particles not supporting a catalyst, and a polymer electrolyte. The fire-resistant proton conductive layer 8 includes a pair of main surfaces which are opposed to each other, and one main surface (lower surface) contacts the polymer electrolyte membrane 1. Moreover, the second portion 81 is formed to have the same composition as the first catalyst layer 2a and to cover the other main surface (upper surface) of the fire-resistant proton conductive layer 8. One end (to be precise, inner periphery) of the second portion 81 is formed to be continuous with the first catalyst layer 2a. To be specific, the second portion 81 is formed integrally with the first catalyst layer 2a and can be regarded as an additional portion added to the first catalyst layer 2a or an extended portion of the first catalyst layer 2a. Meanwhile, another end (to be precise, outer periphery) of the second portion 81 is formed to conform to (be flush with) the outer periphery of the fire-resistant proton conductive layer 8. In order to obtain an operational advantage of the present invention, the above another end of the second portion 81 may be formed outside the outer periphery of the fire-resistant proton conductive layer 8 when viewed from the substantially normal direction of the main surface of the polymer electrolyte membrane 1.

In the above configuration, even if the amount of the oxidizing gas cross-leaking from a portion (portion shown by X in Fig. 1) of the polymer electrolyte membrane 1 on which portion the second catalyst layer 2b of the cathode is not disposed to the first catalyst layer 2a of the anode increases, the cross-leaked oxidizing gas does not react with the fuel gas since the fire-resistant proton conductive layer 8 not containing the catalyst is disposed on an anode-side portion of the polymer electrolyte membrane 1 which portion is opposed to the portion X on which the second catalyst layer 2b is not disposed. Then, the oxidizing gas having passed through the fire-resistant proton conductive layer 8 reacts with the fuel gas in the second portion 81 of the membrane catalyst concentration reduced region 80.

On this account, since a drastic reaction between the fuel gas and the cross-leaked oxidizing gas does not occur at an outer peripheral edge portion of the first catalyst layer 2a, it is possible to prevent the polymer electrolyte membrane 1 from deteriorating. Moreover, the reactive oxygen species, such as hydrogen peroxide, generated in the second portion 81 of the membrane catalyst concentration reduced region 80 hardly reaches the polymer electrolyte membrane 1, and the reaction heat generated when the fuel gas and the oxidizing gas react to generate water is hardly transferred to the polymer electrolyte membrane 1. Thus, by blocking the hydrogen peroxide and the reaction heat, it is possible to prevent the polymer electrolyte membrane 1 from deteriorating.

Moreover, since the second portion 81 of the membrane catalyst concentration reduced region 80 has substantially the same configuration as the first catalyst layer 2a, the second portion 81 can be used as a catalyst layer. On this account, the polymer electrolyte fuel cell mounting the catalyst-coated membrane of the present invention is space-saving and can efficiently generate electric power.

Further, in a case where, as described above, the fire-resistant proton conductive layer 8 is disposed between the outer periphery of the polymer electrolyte membrane 1 and the outer periphery of the first catalyst layer 2a, and the outer periphery of the fire-resistant proton conductive layer 8 and the outer periphery of the second portion 81 conform to each other when viewed from the substantially normal direction of the main surface of the polymer electrolyte membrane 1, it becomes possible to facilitate the manufacturing. As will be described later, for example, in a case where the fire-resistant proton conductive layer 8 is formed on the polymer electrolyte membrane 1, and the second portion 81 is further formed thereon, the second portion 81 and the first catalyst layer 2a can be formed integrally by using a single mask after the fire-resistant proton conductive layer 8 is formed on the polymer electrolyte membrane 1.

Next, respective components of the unit cell 11 mounted on the polymer electrolyte fuel cell of the present invention will be explained.

A conventionally known membrane can be used as the polymer electrolyte membrane 1. The polymer electrolyte membrane 1 has an ion exchange group with respect to the hydrogen ions, and allows the hydrogen ions to selectively penetrate therethrough in its thickness direction. For example, it is possible to use a polymer electrolyte membrane made of a perfluoro carbon sulfonic acid having a main chain constructed of -CF₂- and a side chain containing a sulfonic acid group (-SO₃H) as a functional group of an end thereof.

Specifically, for example, it is possible to use polymer electrolyte membranes which are sold under product names, such as Nafion (produced by Du Pont in the U.S.), Flemion (produced by Asahi Glass Co., Ltd.) and Aciplex (produced by Asahi Kasei Corporation). Note that the thickness of the polymer electrolyte membrane 1 is typically 20 to 200 µm.

Moreover, each of the first catalyst layer 2a of the anode and the second catalyst layer 2b of the cathode contains electrically-conductive carbon particles supporting the electrode catalyst made of the precious metal and a polymer electrolyte having the hydrogen ion conductivity.

A preferable example of the polymer electrolyte is a polymer electrolyte including as a positive ion exchange group, a sulfonic acid group, a carboxylic acid group, a phosphonic acid group, or a sulfonimide group. In consideration of the hydrogen ion conductivity, a polymer electrolyte including the sulfonic acid group is especially preferable.

As the polymer electrolyte including the sulfonic acid group, it is preferable that, for example, an ion exchange capacity be 0.5 to 1.5 meq/g dry resin. To be specific, it is preferable that the ion exchange capacity of the polymer electrolyte be 0.5 meq/g dry resin or more, since it is possible to surely suppress an increase in a resistance value of each of the first catalyst layer 2a and the second catalyst layer 2b at the time of electric power generation. Moreover, it is preferable that the ion exchange capacity be 1.5 meq/g dry resin or less, since it is possible to reduce a water content of each of the first catalyst layer 2a and the second catalyst layer 2b to suppress swelling, so that pores do not clog and flooding can be surely prevented. It is especially preferable that the ion exchange capacity be 0.8 to 1.2 meq/g dry resin.

It is preferable that the polymer electrolyte be a copolymer containing: a polymerization unit based on a perfluorovinyl compound shown by CF₂ = CF - (OCF₂CFX)ₘ - Oₚ - (CF₂)ₙ - SO₃H (where m denotes an integer from 0 to 3, n denotes an integer from 1 to 12, p denotes 0 or 1, and X denotes a fluorine atom or a trifluoromethyl group); and a polymerization unit based on tetrafluoroethylene.

Preferable examples of the fluorovinyl compound are compounds shown by Formulas (4) to (6) below. In the following formulas, q denotes an integer from 1 to 8, r denotes an integer from 1 to 8, and t denotes an integer from 1 to 3.

CF₂ = CFO(CF₂)_{q} - SO₃H (4)

CF₂ = CFOCF₂CF(CF₃)O(CF₂)ᵣ - SO₃H (5)

CF₂ = CF(OCF₂CF(CF₃))ₜO(CF₂)₂ - SO₃H (6)

Moreover, the above-described polymer electrolyte may be used as a constituent material of the polymer electrolyte membrane 1.

The electrode catalyst used in the present invention is used by being supported by the electrically-conductive carbon particles (powder), and is made of metallic particles. The metallic particles are not especially limited, and various metals including the precious metal can be used. For example, it is preferable to use one or more selected from a group consisting of platinum, gold, silver, ruthenium, rhodium, palladium, osmium, iridium, chromium, iron, titanium, manganese, cobalt, nickel, molybdenum, tungsten, aluminium, silicon, zinc, and tin.

Among these, the precious metal, platinum, and an alloy of platinum are preferable. Moreover, an alloy of platinum and ruthenium is especially preferable since the activity of the catalyst in the anode becomes stable.

It is preferable that the carbon particle have a specific surface area of 50 to 1,500 m²/g. To be specific, it is preferable that the specific surface area be 50 m²/g or more, since it is comparatively easy to increase a supporting rate of the electrode catalyst, and an adequate output characteristic of each of the first catalyst layer 2a and the second catalyst layer 2b can be obtained more surely. Moreover, it is preferable that the specific surface area be 1,500 m²/g or less, since pores do not become too fine, covering by the polymer electrolyte becomes easier, and the adequate output characteristic of each of the first catalyst layer 2a and the second catalyst layer 2b can be obtained more surely. It is especially preferable that the specific surface area be 200 to 900 m²/g.

Further, it is preferable that the particle of the electrode catalyst have a mean diameter of 1 to 30 nm. To be specific, it is preferable that the electrode catalyst have the mean diameter of 1 nm or more, since it is industrially easy to prepare. Moreover, it is preferable that the electrode catalyst have the mean diameter of 30 nm or less, since the activity per unit mass of the electrode catalyst can be obtained adequately, and the cost of the fuel cell can be suppressed.

The gas diffusion layer 3a and 3b disposed on the outer side of the first catalyst layer 2a and the outer side of the second catalyst layer 2b, respectively, may be constructed of a conventionally known porous substrate, such as carbon paper, woven fabric, and carbon felt, having the gas permeability and the electrical conductivity. Moreover, the porous substrate may be configured to be subjected to water repellent finish by a conventionally known method. Especially, the porous substrate may be configured such that a conventionally known water-repellent electrically-conductive layer (carbon layer, layer containing water repellent and electrically-conductive carbon particles) is disposed on a surface of the porous substrate which surface contacts the first catalyst layer 2a and/or the second catalyst layer 2b.

Moreover, the separator 4a of the anode and the separator 4b of the cathode in the present embodiment may be constructed of a conventionally known material. For example, the separator 4a of the anode and the separator 4b of the cathode may be formed by gas non-permeable carbon which is made by compressing carbon so that gas cannot penetrate therethrough, and the separator 4a of the anode and the separator 4b of the cathode are configured to be provided with the gas passages 5a and 5b, respectively, to allow the hydrogen gas and the oxygen gas to flow through the gas passages 5a and 5b, respectively.

The separator 4a of the anode and the separator 4b of the cathode have the electrical conductivity, mechanically fasten the membrane-electrode assembly 10, and electrically connect adjacent membrane-electrode assemblies in series. Therefore, the polymer electrolyte fuel cell of the present embodiment can be used as a stack obtained by stacking a plurality of the unit cells 11.

A current collector constructed of, for example, a metallic plate obtained by gold-plating copper may be disposed on a surface (that is, a surface on which the cooling fluid passage 7a is formed) of the separator 4a of the anode which surface is opposite a surface contacting the membrane-electrode assembly 10 and on a surface (that is, a surface on which the cooling fluid passage 7b is formed) of the separator 4b of the cathode which surface is opposite a surface contacting the membrane-electrode assembly 10. With this, current can be collected more surely from the separator 4a of the anode and the separator 4b of the cathode.

The membrane catalyst concentration reduced region 80 includes an inorganic particle as the constituent material in light of the fire resistance. As described above, one preferable example of the inorganic particle is a particle containing as the constituent material at least one type of inorganic solid material selected from a group consisting of carbon and silica. In light of the increase in efficiency of the manufacturing process, it is preferable that the inorganic particle contain at least the carbon particle used in the first and second catalyst layers 2a and 2b. Moreover, the membrane catalyst concentration reduced region 80 includes the polymer electrolyte as the constituent material in light of the hydrogen ion conductivity. The above-described polymer electrolyte can be used as the polymer electrolyte. Further, the membrane catalyst concentration reduced region 80 includes the catalyst in order to cause the cross-leaked oxidizing gas and the fuel gas to moderately react with each other, and the catalyst is supported by the inorganic particle (herein, carbon particle).

Moreover, the fire-resistant proton conductive layer 8 is constructed of the inorganic particle and the polymer electrolyte. In order to increase the efficiency of the manufacturing process and to set the pressure applied to the main surface of the polymer electrolyte membrane 1 to be equal to the pressure applied to the first catalyst layer 2a, the inorganic particle used in the first catalyst layer 2a is preferable as the inorganic particle of the fire-resistant proton conductive layer 8, and it is more preferable that the inorganic particle of the fire-resistant proton conductive layer 8 be constructed of at least the carbon particle. In the present embodiment, the carbon particle (ketchen black for example) used in the first catalyst layer 2a and the second catalyst layer 2b may be used in the fire-resistant proton conductive layer 8. Among the carbon particles, it is preferable to use crystallized carbon in order to more surely suppress the oxidation of the carbon particle in the fire-resistant proton conductive layer 8. Among the crystallized carbon, it is more preferable to use the carbon in which carbon atoms are graphitized. As the graphitized carbon having oxidation resistance, it is preferable to use "tokablack #3855" (Product Name). Moreover, as the graphitized carbon, it is preferable to use the carbon black having a property of I₁₃₅₅/I₁₅₈₀<1.2 and Δν₁₅₈₀>90 as a property obtained by Raman spectroscopy.

Next, although the unit cell 11 and the membrane-electrode assembly 10 of the present embodiment can be manufactured by a conventional method, one example of preferable manufacturing methods will be explained.

The first catalyst layer 2a and the second catalyst layer 2b are formed by using a catalyst layer forming ink containing at least electrically-conductive carbon particles supporting the electrode catalyst constructed of the precious metal, the polymer electrolyte, and dispersion medium.

As the dispersion medium used to prepare the catalyst layer forming ink, it is preferable to use liquid containing alcohol in which the polymer electrolyte can be dissolved or dispersed (including a dispersed state in which a part of the polymer electrolyte is dissolved).

It is preferable that the dispersion medium contain at least one of water, methanol, propanol, n-butyl alcohol, isobutyl alcohol, sec-butyl alcohol, and tert-butyl alcohol. These water and alcohols may be used alone, or may be used as a mixture of two or more of these. As the alcohols, a straight chain type having one OH base in a molecule is especially preferable, and ethanol is especially preferable. These alcohols include an alcohol having ether linkage, such as ethylene glycol monomethyl ether.

Moreover, it is preferable that the catalyst layer forming ink have a solid concentration of 0.1 to 20 mass %. In the case of the solid concentration of 0.1 mass % or higher, when manufacturing the catalyst layer by spraying or applying the catalyst layer forming ink, the catalyst layer having a predetermined thickness can be obtained without repeating spraying or applying the ink many times, and the production efficiency does not deteriorate. Moreover, in the case of the solid concentration of 20 mass % or lower, it becomes easy to properly adjust the viscosity of the liquid mixture, and the first catalyst layer 2a and the second catalyst layer 2b do not become nonuniform. It is especially preferable that the solid concentration be 1 to 10 mass %.

The catalyst layer forming ink can be prepared based on a conventionally known method. Specifically, examples of the conventionally known method are a method using high-speed rotation, such as the use of a stirrer (homogenizer, homomixer or the like) and the use of a high-speed rotation jet method, and a method for pushing out dispersing liquid from a narrow portion by exposure to high pressure using a high-pressure emulsification device or the like to give a shear force to the dispersing liquid.

When forming the first catalyst layer 2a and the second catalyst layer 2b using the catalyst layer forming ink of the present invention, conventionally known methods, such as a bar coater method and a spraying method, may be used. To be specific, the first catalyst layer 2a and the second catalyst layer 2b may be directly formed on the polymer electrolyte membrane 1 or the gas diffusion layers 3a and 3b, respectively, or the first catalyst layer 2a and the second catalyst layer 2b may be formed on the other supporting body sheet, and these may be transferred onto the polymer electrolyte membrane 1 or the gas diffusion layers 3a and 3b, respectively.

Next, as described above, the gas diffusion layers 3a and 3b disposed on the outer side of the first catalyst layer 2a and the outer side of the second catalyst layer 2b, respectively, may be constructed of the conventionally known porous substrate, such as carbon paper, woven fabric, and carbon felt, having the gas permeability and the electrical conductivity. Moreover, the porous substrate may be subjected to the water repellent finish by the conventionally known method.

Further, as described above, the porous substrate may be configured such that the conventionally known water-repellent electrically-conductive layer (carbon layer, layer containing water repellent and conductive carbon particles) is disposed on the surface of the porous substrate which surface contacts the first catalyst layer 2a and/or the second catalyst layer 2b.

Moreover, the separator 4a of the anode and the separator 4b of the cathode in the present embodiment can be manufactured using various materials. For example, the separator 4a of the anode and the separator 4b of the cathode may be formed using a conventional method by gas non-permeable carbon which is made by compressing carbon so that gas cannot penetrate therethrough, and the separator 4a of the anode and the separator 4b of the cathode are provided with the gas passages 5a and 5b, respectively, to allow the hydrogen gas and the oxygen gas to flow through the gas passages 5a and 5b, respectively.

The separator 4a of the anode and the separator 4b of the cathode have the electrical conductivity, mechanically fasten the membrane-electrode assembly 10, and electrically connect adjacent membrane-electrode assemblies in series. Therefore, the polymer electrolyte fuel cell of the present invention can be used as a stack obtained by stacking a plurality of the unit cells 11.

A current collector constructed of, for example, a metallic plate obtained by gold-plating copper may be disposed on a surface (that is, a surface on which the cooling fluid passage 7a is formed) of the separator 4a of the anode which surface is opposite a surface contacting the membrane-electrode assembly 11 and on a surface (that is, a surface on which the cooling fluid passage 7b is formed) of the separator 4b of the cathode which surface is opposite a surface contacting the membrane-electrode assembly 11.

With this, current can be collected more surely from the separator 4a of the anode and the separator 4b of the cathode.

Moreover, the fire-resistant proton conductive layer 8 can be formed by preparing and using a fire-resistant proton conductive layer forming ink containing carbon particles having the electron conductivity, the polymer electrolyte, and the dispersion medium.

As the carbon particles used in the fire-resistant proton conductive layer forming ink, the same particles (ketchen black for example) as in the first catalyst layer 2a and the second catalyst layer 2b can be used. Especially, in order to more surely suppress the oxidation of the carbon particles in the fire-resistant proton conductive layer 8, it is preferable to use the graphitized oxidation resistant carbon. As the graphitized oxidation resistant carbon, it is preferable to use "tokablack #3855" (Product Name). Moreover, as the graphitized oxidation resistant carbon, it is preferable to use the carbon black having a property of I₁₃₅₅/I₁₅₈₀<1.2 and Δν₁₅₈₀>90 as a property obtained by Raman spectroscopy.

As the polymer electrolyte and the dispersion medium used in the fire-resistant proton conductive layer forming ink, the same polymer electrolyte and dispersion medium as in the first catalyst layer 2a and the second catalyst layer 2b can be used. Especially, as the fire-resistant proton conductive layer forming ink, it is possible to use a carbon ink obtained by mixing resin in the ink such that its solid resin amount is, for example, 2 mg/m² carbon. The resin amount can be suitably adjusted depending on the specific surface area of the carbon particle, a pore size, dispersibility and the like. The resin amount may be large as the specific surface area is large and the dispersibility is high.

For example, if the specific surface area is large since the pore is so small that the resin cannot get in, an optimal resin amount is small. For example, in the case of the ketjen black, the optimal resin amount per unit gram is 1.4 g/g- carbon.

The fire-resistant proton conductive layer 8 can be formed by various methods, and can be manufactured in the same manner as the first catalyst layer 2a and the second catalyst layer 2b. For example, the fire-resistant proton conductive layer 8 may be formed using, as masks, a first rubber plate having a square opening of 6 cm x 6 cm and a second square rubber plate of 5.8 cm x 5.8 cm.

A material constituting the mask is not especially limited, and examples are rubber, silicon, EPDM and engineering plastic.

The first plate is disposed on the polymer electrolyte membrane 1, the second plate is disposed at the center of the opening, and these are subjected to hot pressing. Thus, a square annular groove having a width of 2 mm is formed on the polymer electrolyte membrane 1. The fire-resistant proton conductive layer forming ink is printed on the groove by the bar coater, and then is dried.

After the drying, the second plate at the center is removed, and the catalyst layer forming ink of the anode is printed by the bar coater, and then is dried. Thus, the fire-resistant proton conductive layer 8 having a width of 1 mm can be formed on the main surface of the polymer electrolyte membrane 1 so as to be located between the outer periphery (portion shown by R in Fig. 3) of the first catalyst layer 2a and the outer periphery of the polymer electrolyte membrane 1, and the second portion 81 can be formed on the main surface of the fire-resistant proton conductive layer 8 so as to be integral with the first catalyst layer 2a.

In order to form the second catalyst layer 2b of the cathode, after the fire-resistant proton conductive layer 8 and the first catalyst layer 2a (including the second portion 80) are formed, the polymer electrolyte membrane 1 is turned over, a third rubber plate having a square opening of, for example, 5.9 cm x 5.9 cm is disposed at the center, these are subjected to hot pressing, and the catalyst layer forming ink of the cathode is printed and dried.

Thus, if the displacement of the second catalyst layer 2b of the cathode is, for example, within 500 µm, the outer periphery (portion shown by Q in Fig. 3) of the main surface of the second catalyst layer 2b of the cathode can be located between the outer edge (portion shown by P in Fig. 3) of the fire-resistant proton conductive layer 8 and an inner edge of the fire-resistant proton conductive layer 8, that is, the outer periphery (portion shown by R in Fig. 3) of the first catalyst layer 2a of the anode.

To be specific, in this configuration, even if the amount of the oxidizing gas cross-leaking from a portion (portion shown by X in Fig. 1) of the polymer electrolyte membrane 1 on which portion the second catalyst layer 2b of the cathode is not disposed to the first catalyst layer 2a of the anode increases, the reactive oxygen species, such as hydrogen peroxide, generated in the second portion 81 of the membrane catalyst concentration reduced region 80 hardly reaches the polymer electrolyte membrane 1, and the reaction heat generated when the fuel gas and the oxidizing gas react to generate water is hardly transferred to the polymer electrolyte membrane 1. This is because the fire-resistant proton conductive layer 8 not containing the catalyst exists at an anode-side portion which is opposed to the portion X on which the second catalyst layer 2b is not disposed. Thus, by blocking the hydrogen peroxide and the reaction heat, it is possible to prevent the polymer electrolyte membrane 1 from deteriorating.

Moreover, since the second portion 81 of the membrane catalyst concentration reduced region 80 has the same configuration as the first catalyst layer 2a, the second portion 81 can be used as a catalyst layer. On this account, the polymer electrolyte fuel cell mounting the catalyst-coated membrane of the present invention is space-saving and can efficiently generate electric power.

The catalyst-coated membrane and membrane-electrode assembly of the present embodiment configured as above have excellent durability. Therefore, the polymer electrolyte fuel cell of the present embodiment including the catalyst-coated membrane or membrane-electrode assembly of the present embodiment also has excellent durability.

In the present embodiment, the fire-resistant proton conductive layer 8 of the membrane catalyst concentration reduced region 80 includes as the constituent material the inorganic particles (carbon particles) not supporting the catalyst. However, the present embodiment is not limited to this, and the fire-resistant proton conductive layer 8 may be configured to contain the catalyst as long as the concentration of the catalyst in the fire-resistant proton conductive layer 8 is essentially zero, that is, as long as the catalyst does not react with the cross-leaked reactant gas in the fire-resistant proton conductive layer 8, or as long as even if the catalyst react with the cross-leaked reactant gas, the reaction heat and the like generated by the reaction do not deteriorate the polymer electrolyte membrane 1.

Next, a modification example of the present embodiment will be explained.

### Modification Example 1

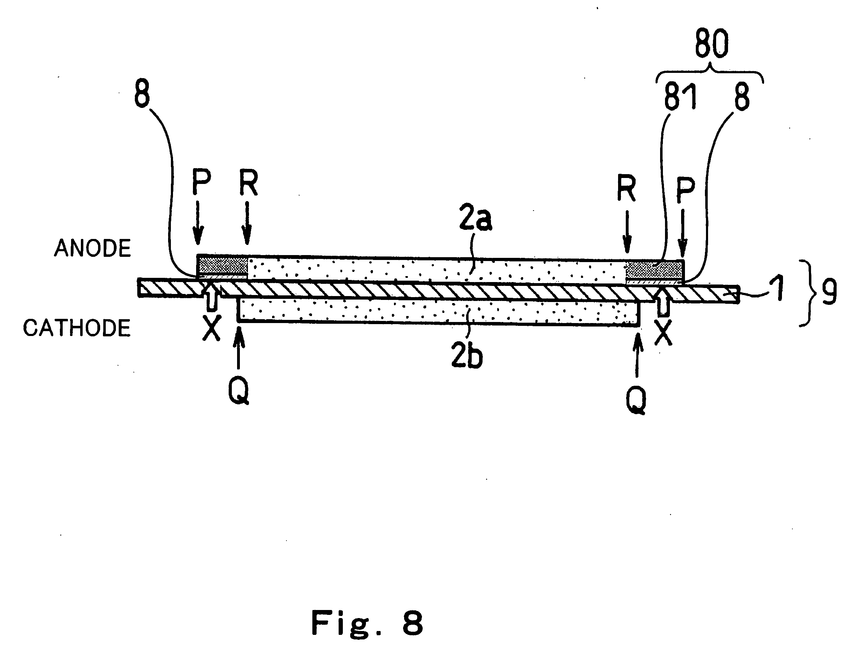

Fig. 8 is a cross-sectional view schematically showing a modification example of the catalyst-coated membrane of Embodiment 1.

As with the catalyst-coated membrane 9 of Embodiment 1, the catalyst-coated membrane 9 of Modification Example 1 is formed such that the catalyst concentration (which is such a concentration that the catalyst does not act with respect to the reaction of the reactant gas flowing into the first portion, or that even if the catalyst acts with respect to the reaction of the reactant gas, the reaction heat generated by the reaction does not deteriorate the polymer electrolyte membrane) of the first portion 8 of the membrane catalyst concentration reduced region 80 is lower than the catalyst concentration of the second portion 81. The membrane catalyst concentration reduced region 80 is formed such that its catalyst concentration becomes lower from a portion far from the first main surface F10 of the polymer electrolyte membrane 1 to a portion close to the first main surface F10.

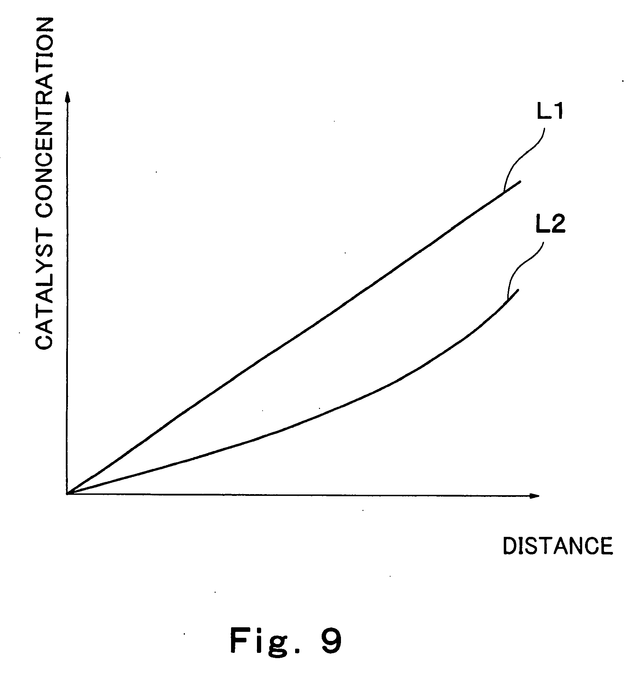

The following will explain a state where "the membrane catalyst concentration reduced region 80 is formed such that its catalyst concentration becomes lower from a portion far from the first main surface F10 of the polymer electrolyte membrane 1 to a portion close to the first main surface F10" in reference to Figs. 9 to 11.

Figs. 9 to 11 are graphs showing a relation between the catalyst concentration of the membrane catalyst concentration reduced region 80 shown in Fig. 8 and a distance from a surface of the membrane catalyst concentration reduced region 80 which contacts the main surface F10 of the polymer electrolyte membrane 1.

As shown by straight lines L1 and L2 in Fig. 9, the membrane catalyst concentration reduced region 80 of Modification Example 1 may be formed such that the catalyst concentration thereof monotonously increases as the distance from the surface of the membrane catalyst concentration reduced region 80 which surface contacts the main surface F10 of the polymer electrolyte membrane 1 toward the substantially normal direction of the main surface of the polymer electrolyte membrane 1 increases. In other words, the membrane catalyst concentration reduced region 80 may be formed such that the catalyst concentration monotonously decreases from an upper main surface of the membrane catalyst concentration reduced region 80 to a lower main surface of the membrane catalyst concentration reduced region 80 (see Fig. 3).

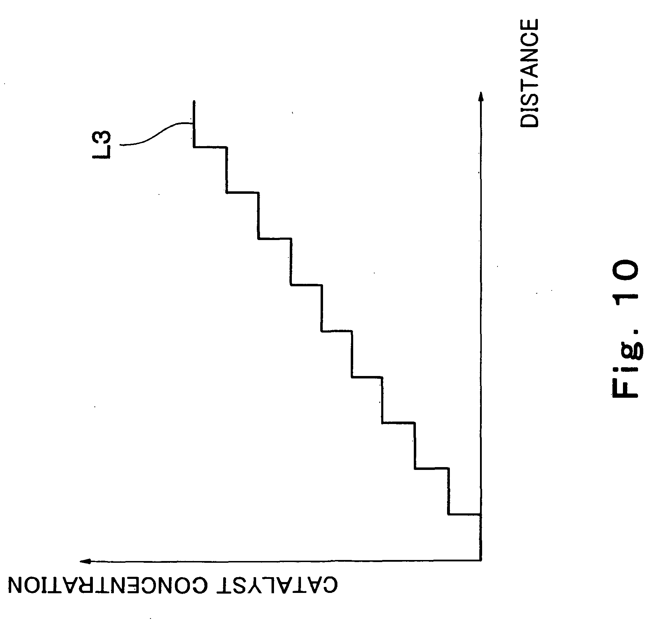

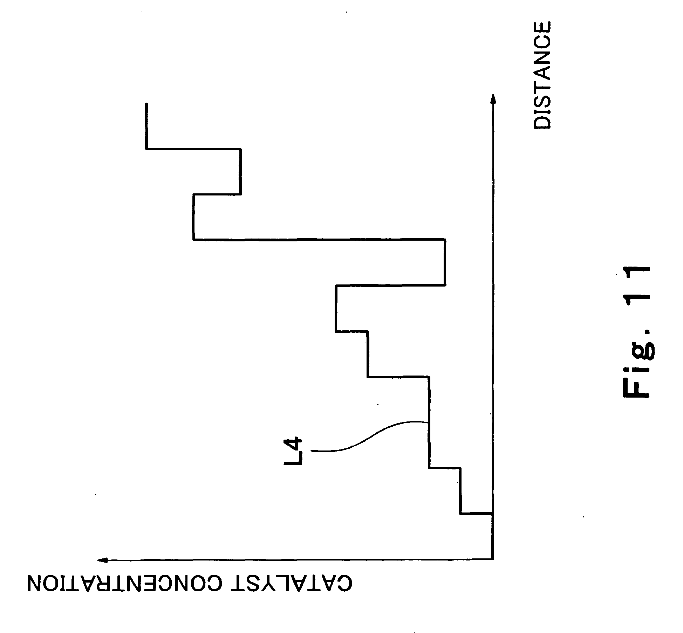

Moreover, as shown by a line L3 in Fig. 10, the membrane catalyst concentration reduced region 80 of Modification Example 1 may be formed such that the catalyst concentration decrease stepwise (in a staircase manner) from the upper main surface of the membrane catalyst concentration reduced region 80 to the lower main surface of the membrane catalyst concentration reduced region 80. As shown by a line L4 in Fig. 11, the membrane catalyst concentration reduced region 80 of Modification Example 1 may be formed such that the catalyst concentration decrease overall from the upper main surface of the membrane catalyst concentration reduced region 80 to the lower main surface of the membrane catalyst concentration reduced region 80, although a part of the catalyst concentration is higher than the catalyst concentration of a portion located on an upper side.

Thus, the state where "the membrane catalyst concentration reduced region 80 is formed such that its catalyst concentration becomes lower from the portion far from the first main surface F10 of the polymer electrolyte membrane 1 to the portion close to the first main surface F10" denotes that the catalyst is distributed such that the catalyst concentration decreases overall from the upper main surface of the membrane catalyst concentration reduced region 80 to the lower main surface of the membrane catalyst concentration reduced region 80.

The membrane catalyst concentration reduced region 80 is formed by an ink prepared in the same manner as the above-described catalyst layer forming ink. Specifically, an ink containing at least the inorganic particles (herein, carbon particles) supporting the catalyst, the polymer electrolyte, and the dispersion medium is prepared. At this time, plural types of inks are prepared, which are different from each other in the amount of catalyst. Then, the ink which is lowest in the catalyst concentration (or which does not contain the catalyst) is sprayed on or applied to the main surface F10 of the polymer electrolyte membrane 1, and then, the inks which are higher in the catalyst concentration are sprayed thereon or applied thereto one after another, to form a plurality of layers, thereby forming the first portion 8 and the second portion 81 (that is, the membrane catalyst concentration reduced region 80).

As shown in Fig. 9, in order to monotonously increase the catalyst concentration of the membrane catalyst concentration reduced region 80, plural types of inks which are different from each other in the catalyst concentration are prepared, and thin layers are formed in a multistage manner by spraying or applying the inks. Thus, it is possible to form the membrane catalyst concentration reduced region 80 whose catalyst concentration monotonously increases when viewed macroscopically.

Moreover, the portion of the membrane catalyst concentration reduced region 80 which portion contacts the main surface F10 of the polymer electrolyte membrane 1, that is, the first portion 8 may be formed to have the catalyst concentration that is lower than that of the second portion 81 that is the remaining portion, and a boundary between the first portion 8 and second portion 81 of the membrane catalyst concentration reduced region 80 can be determined arbitrarily.

### Embodiment 2

Next, Embodiment 2 of the polymer electrolyte fuel cell of the present invention will be explained. The polymer electrolyte fuel cell of Embodiment 2 is configured such that the catalyst-coated membrane 9 mounted on the membrane-electrode assembly 10 of the unit cell 11 mounted on the polymer electrolyte fuel cell of Embodiment 1 shown in Fig. 1 is replaced with a different component. Other than the catalyst-coated membrane, the polymer electrolyte fuel cell of Embodiment 2 is the same as the polymer electrolyte fuel cell of Embodiment 1.

Hereinafter, the catalyst-coated membrane 9 (the catalyst-coated membrane of Embodiment 2 of the present invention) mounted on the unit cell 11 of Embodiment 2 will be explained.

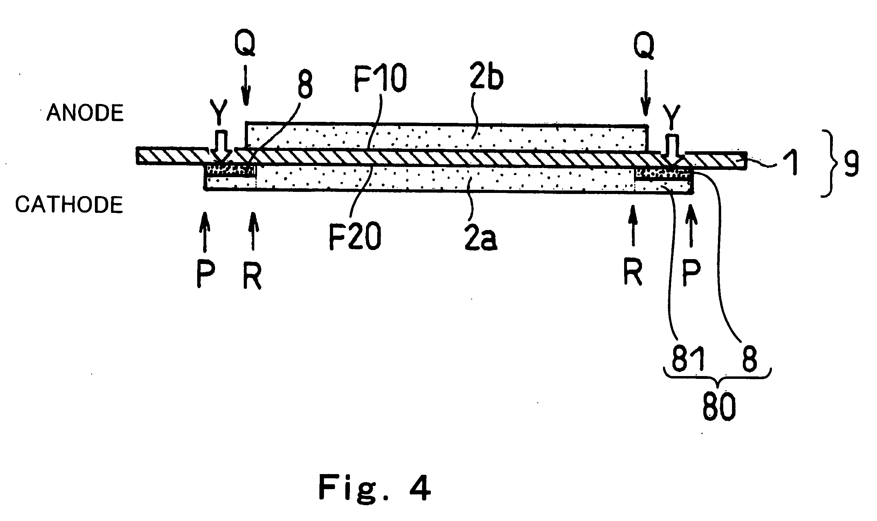

Fig. 4 is a schematic cross-sectional view of the catalyst-coated membrane 9 mounted on the unit cell 11 of the present embodiment. As shown in Fig. 4, in the catalyst-coated membrane 9 of the present embodiment, the area of the main surface of the first catalyst layer 22a of the cathode is smaller than the area of the main surface of the second catalyst layer 2b of the anode. An outer periphery (portion shown by Q in Fig. 4) of the main surface of the second catalyst layer 2b of the anode is located between the inner edge (portion shown by R in Fig. 4) of the fire-resistant proton conductive layer 8 which edge is the outer periphery of the main surface of the first catalyst layer 2a of the cathode and the outer edge (portion shown by R in Fig. 4) of the fire-resistant proton conductive layer 8.

In this configuration, even if the amount of the fuel gas cross-leaking from a portion (portion shown by Y in Fig. 4) of the polymer electrolyte membrane 1 on which portion the second catalyst layer 2b of the anode is not disposed to the first catalyst layer 2a of the cathode increases, the reactive oxygen species, such as hydrogen peroxide, generated in the second portion 81 of the membrane catalyst concentration reduced region 80 hardly reaches the polymer electrolyte membrane 1, and the reaction heat generated when the fuel gas and the oxidizing gas react to generate water is hardly transferred to the polymer electrolyte membrane 1. This is because the fire-resistant proton conductive layer 8 not containing the catalyst exists at a cathode-side portion which is opposed to the portion Y on which the second catalyst layer 2b is not disposed. Thus, by blocking the hydrogen peroxide and the reaction heat, it is possible to prevent the polymer electrolyte membrane 1 from deteriorating.

Moreover, since the second portion 81 of the membrane catalyst concentration reduced region 80 has the same configuration as the first catalyst layer 1a, the second portion 81 can be used as a catalyst layer. On this account, the polymer electrolyte fuel cell mounting the catalyst-coated membrane of the present invention is space-saving and can efficiently generate electric power.

The catalyst-coated membrane and membrane-electrode assembly of the present embodiment configured as above have excellent durability. Therefore, the polymer electrolyte fuel cell of the present embodiment including the catalyst-coated membrane or membrane-electrode assembly of the present embodiment also has excellent durability.

The membrane catalyst concentration reduced region 80 of the catalyst-coated membrane 9 of Embodiment 2 is configured in the same manner as the membrane catalyst concentration reduced region 80 of Embodiment 1. However, the membrane catalyst concentration reduced region 80 of the catalyst-coated membrane 9 of Embodiment 2 is not limited to this, and may be configured in the same manner as the membrane catalyst concentration reduced region 80 of Modification Example 1 of the catalyst layer assembly 9 of Embodiment 1.

### Embodiment 3

Next, Embodiment 3 of the polymer electrolyte fuel cell of the present invention will be explained. The polymer electrolyte fuel cell of Embodiment 3 is configured such that the membrane-electrode assembly 10 mounted on the unit cell 11 mounted on the polymer electrolyte fuel cell of Embodiment 1 shown in Fig. 1 is replaced with a different component. Other than the membrane-electrode assembly, the polymer electrolyte fuel cell of Embodiment 3 is the same as the polymer electrolyte fuel cell of Embodiment 1.

Hereinafter, the membrane-electrode assembly 10 (Embodiment 3 of the membrane-electrode assembly of the present invention) included in the unit cell 11 of Embodiment 3 will be explained.

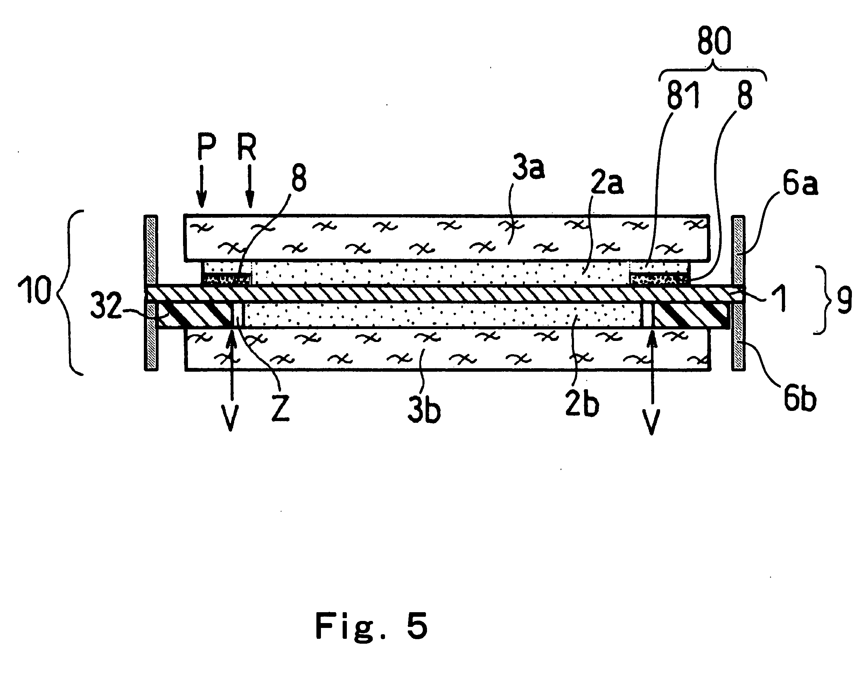

Fig. 5 is a schematic cross-sectional view of the membrane-electrode assembly 10 mounted on the unit cell 11 of the present embodiment. As shown in Fig. 5, in the membrane-electrode assembly 10 of the present embodiment, a first space filling member (sub-gasket) 32 is further disposed on the second main surface F20 of the polymer electrolyte membrane 1 so as to be located outside the second catalyst layer 2b of the cathode and not to overlap with the second catalyst layer 2b. Specifically, the first space filling member 32 has an annular and substantially rectangular shape, and is disposed outside the second catalyst layer 2b when viewed from the substantially normal direction of the main surface of the polymer electrolyte membrane 1, so as to fill a space formed between the polymer electrolyte membrane 1 and the gas diffusion layer 3b.

The first space filling member 32 is formed such that an inner periphery (portion shown by V in Fig. 5) of the first space filling member 32 is located between the outer edge (portion shown by P in Fig. 5) and inner edge (portion shown by R in Fig. 5) of the fire-resistant proton conductive layer 8 when viewed from the substantially normal direction of the main surface of the polymer electrolyte membrane 1, and an outer periphery of the first space filling member 32 is located outside the outer periphery of the gas diffusion layer 2b.

As the first space filling member 32, any material can be used as long as the material can fill the space formed between the polymer electrolyte membrane 1 and the gas diffusion layer 3b. For example, the same material as the gaskets 6a and 6b explained in Embodiment 1 may be used. Moreover, it is preferable that the first space filling member 32 be made of synthetic resin having appropriate mechanical strength and flexibility, in order to surely prevent the outer peripheral portion of the polymer electrolyte membrane 1 from being damaged by the edge of the gas diffusion layer 3b when fastening the membrane-electrode assembly 10 with the separators 4a and 4b or in order to improve handleability of an assembly of the polymer electrolyte membrane 1 and the first space filling member 32 when manufacturing the catalyst-coated membrane. In light of these, it is more preferable that the synthetic resin be comprised of at least one or more resin selected from a group consisting of polyethylene naphthalate, polytetrafluoroethylene, polyethylene terephthalate, fluoroethylene-propylene copolymer, tetrafluoroethylene-perfluoro alkoxy ethylene copolymer, polyethylene, polypropylene, polyether amide, polyether imide, polyether ether ketone, polyether sulfone, polyphenylene sulfide, polyarylate, polysulfide, polyimide, and polyimide amide.

A method for disposing the first space filling member 32 is as follows: for example, a stack body including two thin sheets as rubber masks is used when forming the second catalyst layer 2b by application; the fire-resistant proton conductive layer 8, the first catalyst layer 2a and the second catalyst layer 2b are formed on the stack body and dried; the upper sheet is removed; and the lower sheet may be used as the first space filling member 32. In accordance with this method, it is possible to surely narrow a gap Z formed between the second catalyst layer 2b and the first space filling member 32 or to clear the gap Z as much as possible.

However, in the present embodiment, in the case of disposing the first space filling member 32 around the outer peripheral portion of the second catalyst layer 2b of the cathode, the gap Z may be slightly formed between the second catalyst layer 2b and the first space filling member 32. Even in such case, since the fire-resistant proton conductive layer 8 exists on the anode side that is the counter electrode with respect to the oxidizing gas cross-leaking from the gap Z, the generated hydrogen peroxide does not reach the polymer electrolyte membrane 1, and the combustion reaction heat is hardly transferred to the polymer electrolyte membrane 1. Thus, the polymer electrolyte membrane 1 can be prevented from deteriorating.

Moreover, in the case of stacking and fastening the unit cells 11, the first space filling member 32 can prevent the end portion of the gas diffusion layer 3b from bending toward the main surface of the polymer electrolyte membrane 1 and can prevent the reactant gas from cross-leaking even in a case where the main surface of the polymer electrolyte membrane 1 is damaged by the end portion of the gas diffusion layer 3a.

As above, in the present embodiment, since the first space filling member 32 is disposed so as to fill the space formed between the polymer electrolyte membrane 1 and the gas diffusion layer 3b, it is possible to decrease the amount of the oxidizing gas passing through the polymer electrolyte membrane 1 to cross-leak, and to physically protect the polymer electrolyte membrane 1.

To be specific, in this configuration, even if the amount of the oxidizing gas cross-leaking from a portion (portion shown by Z in Fig. 5) where the second catalyst layer 2b is not disposed through the polymer electrolyte membrane 1 increases, the generated hydrogen peroxide does not reach the polymer electrolyte membrane 1, and the combustion reaction heat is hardly transferred to the polymer electrolyte membrane 1. This is because the fire-resistant proton conductive layer 8 exists at the anode-side that is the counter electrode. Thus, the polymer electrolyte membrane can be prevented from deteriorating.

The catalyst-coated membrane and membrane-electrode assembly of the present embodiment configured as above have excellent durability. Therefore, the polymer electrolyte fuel cell of the present embodiment including the catalyst-coated membrane or membrane-electrode assembly of the present embodiment also has excellent durability.

The membrane catalyst concentration reduced region 80 of the catalyst-coated membrane 9 of Embodiment 3 has the same configuration as the membrane catalyst concentration reduced region 80 of Embodiment 1. However, the membrane catalyst concentration reduced region 80 of the catalyst-coated membrane 9 of Embodiment 3 is not limited to this, and may be configured in the same manner as the membrane catalyst concentration reduced region 80 of Modification Example 1 of the catalyst-coated membrane 9 of Embodiment 1.

### Embodiment 4

Next, Embodiment 4 of the polymer electrolyte fuel cell of the present invention will be explained. The polymer electrolyte fuel cell of Embodiment 4 is configured such that the membrane-electrode assembly 10 mounted on the unit cell 11 mounted on the polymer electrolyte fuel cell of Embodiment 1 shown in Fig. 1 is replaced with a different component. Other than the membrane-electrode assembly, the polymer electrolyte fuel cell of Embodiment 4 is the same as the polymer electrolyte fuel cell of Embodiment 1.

Hereinafter, the membrane-electrode assembly 10 (Embodiment 4 of the membrane-electrode assembly of the present invention) included in the unit cell 11 of Embodiment 4 will be explained.

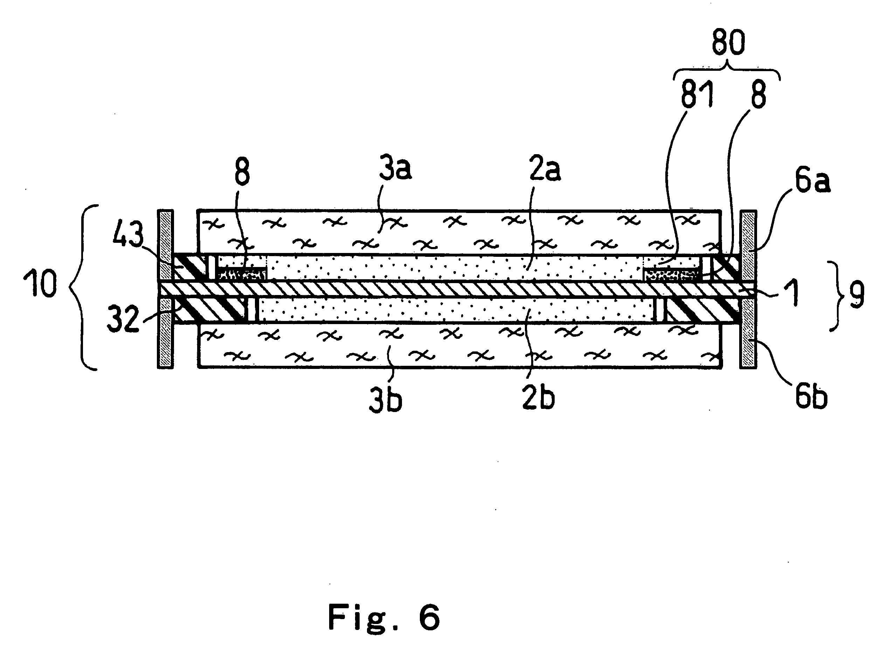

Fig. 6 is a schematic cross-sectional view of the membrane-electrode assembly 10 mounted on the unit cell 11 of the present embodiment. As shown in Fig. 6, the membrane-electrode assembly 10 of the present embodiment includes the first space filling member 32 as with the membrane-electrode assembly 10 of Embodiment 3, and further includes a second space filling member (sub-gasket) 43 on the first main surface F10 of the polymer electrolyte membrane 1 so as to be located outside the membrane catalyst concentration reduced region 80 and not to overlap with the membrane catalyst concentration reduced region 80. Specifically, the second space filling member 42 has an annular and substantially rectangular shape, and is disposed outside the membrane catalyst concentration reduced region 80 when viewed from the substantially normal direction of the main surface of the polymer electrolyte membrane 1, so as to fill a space formed between the polymer electrolyte membrane 1 and the gas diffusion layer 3a.

The second space filling member 42 is formed such that the outer periphery of the gas diffusion layer 3a is located between the inner periphery and outer periphery of the second space filling member 42 when viewed from the substantially normal direction of the main surface of the polymer electrolyte membrane 1.

The second space filling member 43 can be formed and disposed in the same manner as the first space filling member 32 of Embodiment 3.

With this configuration, the polymer electrolyte membrane 1 can be prevented from deteriorating by blocking the hydrogen peroxide and the reaction heat as with Embodiment 3. Further, by disposing the sub-gaskets on both sides of the polymer electrolyte membrane 1, the following operational advantages can be obtained: the generation of the cross leakage gas itself can be suppressed; and the sub-gaskets physically support the polymer electrolyte membrane to increase the physical strength.

The catalyst-coated membrane and membrane-electrode assembly of the present embodiment configured as above have excellent durability. Therefore, the polymer electrolyte fuel cell of the present embodiment including the catalyst-coated membrane or membrane-electrode assembly of the present embodiment also has excellent durability.

The membrane catalyst concentration reduced region 80 of the catalyst-coated membrane 9 of Embodiment 4 has the same configuration as the membrane catalyst concentration reduced region 80 of Embodiment 1. However, the membrane catalyst concentration reduced region 80 of the catalyst-coated membrane 9 of Embodiment 4 is not limited to this, and may be configured in the same manner as the membrane catalyst concentration reduced region 80 of Modification Example 1 of the catalyst-coated membrane 9 of Embodiment 1.

The foregoing has explained preferred embodiments of the present invention. However, the present invention is not limited to these.

For example, the gasket and the first space filling member may be integral with each other. Moreover, the gasket and the second space filling member may be integral with each other.

The above-described embodiments have explained the unit cell as the polymer electrolyte fuel cell. However, a plurality of (for example, 10 to 200) unit cells may be stacked to form a stack, the stack may be sandwiched between a pair of end plates via the current collectors and insulating plates, and the stack, the current collectors, the insulating plates and the end plates may be fastened by fastening bolts and nuts to be used.

In the above-described embodiments, the cooling fluid passage is formed on each of the separator of the anode and the separator of the cathode. However, the cooling fluid passage may be formed on any one of the separators. Further, in the case of using the above-described stack body, it is possible to use the unit cell including the separators of the anode and the cathode which have no cooling fluid passage.

Moreover, regardless of the existence of the cooling fluid passage, the current collector may be disposed on a surface of the separator which surface is opposed to a surface contacting the membrane-electrode assembly.

Moreover, for example, the cooling fluid passage may not be formed between respective unit cells, but may be formed for every two unit cells. In such case, it is possible to use a single separator which has a fuel gas passage on one surface thereof and an oxidizing gas passage on the other surface and serves as both a separator plate of the anode and a separator plate of the cathode.

Moreover, the above-described embodiments have explained that the membrane catalyst concentration reduced region is formed around the entire outer periphery of the first catalyst layer. However, the present invention is not limited to this, and a part of the membrane catalyst concentration reduced region may be omitted as long as the operational advantages of the present invention can be obtained.

Further, in the above-described embodiments, the gas diffusion electrode may be configured such that an additional layer (for example, an additional layer which has water repellency and electron conductivity and improves adhesion between the gas diffusion layer and the catalyst layer) is disposed between the gas diffusion layer and the catalyst layer.

From the foregoing explanation, many modifications and other embodiments of the present invention are obvious to one skilled in the art. Therefore, the foregoing explanation should be interpreted only as an example, and is provided for the purpose of teaching the best mode for carrying out the present invention to one skilled in the art. The structures and/or functional details may be substantially modified within the spirit of the present invention.

### Examples

Hereinafter, the present invention will be explained in more detail using Example and Comparative Example. However, the present invention is not limited to these Examples.

### Example 1

In the present example, the polymer electrolyte fuel cell of Embodiment 1 of the present invention was manufactured.

First, the catalyst-coated membrane 9 shown in Fig. 3 was manufactured such that the first catalyst layer 2a of the anode was formed to be smaller than the second catalyst layer 2b of the cathode, and the fire-resistant proton conductive layer 8 was disposed on the anode side. Next, the gas diffusion layers 3a and 3b were disposed to manufacture the membrane-electrode assembly 10 shown in Fig. 2. Using the obtained membrane-electrode assembly 10, the polymer electrolyte fuel cell (unit cell) having the configuration shown in Fig. 1 was manufactured.

The size of the first catalyst layer 2a of the anode was 60 mm x 60 mm, and the size of the second catalyst layer 2b of the cathode was 58 mm x 58 mm. Moreover, the fire-resistant proton conductive layer 8 of the anode was formed to have a width (distance between the outer edge and the inner edge shown in Fig. 1) of 3 mm. To be specific, as shown in Fig. 1, the fire-resistant proton conductive layer 8 was formed such that the inner edge thereof conformed to the outer periphery of the first catalyst layer 2a, and the outer edge of the main surface of the second catalyst layer 2b was located between the outer edge and inner edge thereof when viewed from the substantially normal direction of the main surface of the polymer electrolyte membrane 1.

### Comparative Example 1

In the present comparative example, a polymer electrolyte fuel cell (unit cell) having the same configuration as the polymer electrolyte fuel cell of Example 1 except that the fire-resistant proton conductive layer 8 was not disposed was manufactured.

In the present comparative example, the size of the first catalyst layer 2a of the anode was 140 mm x 140 mm, and the size of the second catalyst layer 2b of the cathode was 138 mm x 138 mm.

### Durability Evaluation Test

The following electric power generation test was carried out for each of the unit cells manufactured in Example 1 and Comparative Example 1.

That is, the unit cell of Example 1 was caused to generate electric power for 1,500 hours at temperature conditions that were an anode gas humidification temperature of 50°C, a cell temperature of 90°C and a cathode gas humidification temperature of 50°C, using hydrogen as the anode gas and oxygen as the cathode gas at a hydrogen utilization ratio of 70%, an oxygen utilization ratio of 55% and a current density of 0.16 A/cm². Note that these humidification conditions of the unit cell of Example 1 were severer than the below-described humidification conditions of the unit cell of Comparative Example 1.

Moreover, the unit cell of Comparative Example 1 was caused to generate electric power at the same humidification conditions as the unit cell of Example 1 except that the anode gas humidification temperature was 60°C, and the cathode gas humidification temperature was 60°C.

The unit cell of Example 1 and the unit cell of Comparative Example 1 were caused to continuously generate electric power under the above conditions. Then, times from when the electric power generation started until when the output battery voltage became 0 V were compared with each other. Results are shown in Table 1.

**Table 1**

| | Configuration Conditions | | Result Of Durability Evaluation Test |
|---|---|---|---|
| | Displacement Between Anode Catalyst Layer And Cathode Catalyst Layer | Electron-Proton Conductive Layer | |
| Example 1 | Displaced | Provided | 1,000 Hours |
| Comparative Example 1 | Displaced | Not Provided | 480 Hours |

As is clear from Table 1, it is confirmed that the polymer electrolyte fuel cell of Example 1 included in the polymer electrolyte fuel cell of the present invention has more excellent durability than the polymer electrolyte fuel cell of Comparative Example 1, although the polymer electrolyte fuel cell of Example 1 is under severer operating conditions (humidification conditions) than the polymer electrolyte fuel cell Comparative Example 1.

### Industrial Applicability

The present invention is useful as means for manufacturing a highly durable fuel cell with high productivity, and is applicable to a fuel cell using a polymer electrolyte membrane, and especially to a stationary cogeneration system, an electric car and the like.

## Claims

1. A catalyst-coated membrane comprising at least:
a first catalyst layer (2a) and a second catalyst layer (2b) which are opposed to each other, said second catalyst layer (2b) including at least a catalyst;
a polymer electrolyte membrane (1) which is disposed between said first catalyst layer (2a) and said second catalyst layer (2b), has a first main surface and a second main surface which are opposed to each other, and is disposed such that the first main surface contacts one of main surfaces of said first catalyst layer and the second main surface contacts one of main surfaces of said second catalyst layer; and
a membrane catalyst concentration reduced region (80) which contacts an outer periphery of said first catalyst layer (2a) and the first main surface of said polymer electrolyte membrane (1), has hydrogen ion conductivity and heat resistance, and is formed in an annular shape, wherein
said membrane catalyst concentration reduced region (80) includes a first portion (8) which contacts the first main surface of said polymer electrolyte membrane (1) and has the hydrogen ion conductivity and the heat resistance and a second portion (81) which is a remaining portion other than the first portion (8) has the hydrogen ion conductivity and the heat resistance, and contains a catalyst;
when viewed from a normal direction of the main surfaces of said polymer electrolyte membrane (1), said membrane catalyst concentration reduced region (80) is formed to have a two-layer structure including the first portion (8) and the second portion (81);
the first portion (8) does not contain the catalyst or contains the catalyst, the amount of which is such that the catalyst does not act with respect to a reaction of a reactant gas having flowed into the first portion, or that even if the catalyst acts with respect to the reaction of the reactant gas, reaction heat generated by the reaction does not deteriorate said polymer electrolyte membrane; and
a catalyst concentration of the first portion (8) is lower than a catalyst concentration of the second portion (81) and a catalyst concentration of the first catalyst layer (2a),
**characterized in that**
an outer periphery of the main surfaces of said second catalyst layer (2b) is located between an edge of said membrane catalyst concentration reduced region which edge contacts said first catalyst layer (2a) and an edge opposed to the edge contacting said first catalyst layer such that, when viewed from a substantially normal direction of the main surface of the polymer electrolyte membrane(1), an outer periphery of the firstcatalyst layer is located inside an outer periphery of the second catalyst layer.

2. The catalyst-coated membrane according to claim 1, wherein said membrane catalyst concentration reduced region (80) is formed such that a catalyst concentration thereof becomes lower from a portion far from the first main surface of said polymer electrolyte membrane (1) to a portion close to the first main surface.

3. The catalyst-coated membrane according to claim 1, wherein:
said membrane catalyst concentration reduced region (80) contains as constituent materials, polymer electrolyte having the hydrogen ion conductivity and inorganic particles; and
the inorganic particles are particles which are chemically stable under an operating condition of a polymer electrolyte fuel cell and do not generate chemical species which decompose the polymer electrolyte.

4. The catalyst-coated membrane according to claim 3, wherein the inorganic particles are particles containing as a constituent material at least one type of inorganic solid material selected from a group consisting of carbon and silica.

5. The catalyst-coated membrane according to claim 1, further comprising a first space filling member (32) which is disposed on the second main surface of said polymer electrolyte membrane so as to be located outside said second catalyst layer and not to overlap with said second catalyst layer, wherein
when viewed from a normal direction of the main surface of said polymer electrolyte membrane, an inner edge of said first space filling member is located between the edge of said membrane catalyst concentration reduced region which edge contacts said first catalyst layer and the edge opposed to the edge contacting said first catalyst layer.

6. The catalyst-coated membrane according to claim 5, wherein said first space filling member (32) contains engineering plastic as a constituent material.

7. The catalyst-coated membrane according to claim 1 or 5, further comprising a second space filling member (43) which is disposed on the first main surface of said polymer electrolyte membrane (1) so as to be located outside said membrane catalyst concentration reduced region and not to overlap with said membrane catalyst concentration reduced region.

8. The catalyst-coated membrane according to claim 7, wherein said second space filling member (43) contains engineering plastic as a constituent material.

9. The catalyst-coated membrane according to claim 1, wherein said first catalyst layer (2a) is a catalyst layer for an anode, and said second catalyst layer (25) is a catalyst layer for a cathode.

10. The catalyst-coated membrane according to claim 1, wherein said first catalyst layer (2a) is a catalyst layer for a cathode, and said second catalyst layer (2b) is a catalyst layer for an anode.

11. A membrane-electrode assembly comprising:
a pair of gas diffusion layers which are disposed to be opposed to each other; and
the catalyst-coated membrane according to claim 1 disposed between said pair of gas diffusion layers.

12. A polymer electrolyte fuel cell comprising the membrane-electrode assembly according to claim 11.

## Patentansprüche

1. Katalysator-beschichtete Membran, die zumindest umfasst:
eine erste Katalysatorschicht (2a) und eine zweite Katalysatorschicht (2b), die einander gegenüberliegen, wobei die zweite Katalysatorschicht (2b) zumindest einen Katalysator beinhaltet;
eine Polymerelektrolytmembran (1), die zwischen der ersten Katalysatorschicht (2a) und der zweiten Katalysatorschicht (2b) angeordnet ist, eine erste Hauptfläche und eine zweite Hauptfläche, die einander gegenüberliegen, aufweist und so angeordnet ist, dass die erste Hauptfläche in Kontakt mit einer der Hauptflächen der ersten Katalysatorschicht ist und die zweite Hauptfläche in Kontakt mit einer der Hauptflächen der zweiten Katalysatorschicht ist; und
einen Membranbereich (80) mit reduzierter Katalysatorkonzentration, der in Kontakt mit einer äußeren Peripherie der ersten Katalysatorschicht (2a) und mit der ersten Hauptfläche der Polymerelektrolytmembran (1) ist, Wasserstoffionenleitfähigkeit sowie Wärmebeständigkeit aufweist, und ringförmig ausgebildet ist, wobei
der Membranbereich (80) mit reduzierter Katalysatorkonzentration einen ersten Abschnitt (8) beinhaltet, der in Kontakt mit der ersten Hauptfläche der Polymerelektrolytmembran (1) ist und die Wasserstoffionenleitfähigkeit sowie die Wärmebeständigkeit aufweist, und einen zweiten Abschnitt (81), der ein verbleibender Abschnitt, ausgenommen der erste Abschnitt (8), ist, die Wasserstoffionenleitfähigkeit sowie die Wärmebeständigkeit aufweist, und einen Katalysator enthält;
bei Betrachtung aus einer Normalenrichtung der Hauptflächen der Polymerelektrolytmembran (1), der Membranbereich (80) mit reduzierter Katalysatorkonzentration so ausgebildet ist, dass er eine zweischichtige Struktur aufweist, die den ersten Abschnitt (8) und den zweiten Abschnitt (81) beinhaltet;
der erste Abschnitt (8) den Katalysator nicht enthält oder den Katalysator enthält, dessen Menge so ist, dass der Katalysator in Bezug auf eine Reaktion eines Reaktantgases, das in den ersten Abschnitt geströmt ist, nicht wirkt oder dass, selbst wenn der Katalysator in Bezug auf die Reaktion des Reaktantgases wirkt, durch die Reaktion erzeugte Reaktionswärme die Polymerelektrolytmembran nicht beeinträchtigt; und
eine Katalysatorkonzentration des ersten Abschnitts (8) geringer ist als eine Katalysatorkonzentration des zweiten Abschnitts (81) und eine Katalysatorkonzentration der ersten Katalysatorschicht (2a),
**dadurch gekennzeichnet, dass**
sich eine äußere Peripherie der Hauptflächen der zweiten Katalysatorschicht (2b) befindet zwischen einem Rand des Membranbereichs mit reduzierter Katalysatorkonzentration, welcher Rand in Kontakt mit der ersten Katalysatorschicht (2a) ist, und einem Rand, der dem in Kontakt mit der ersten Katalysatorschicht befindlichen Rand gegenüberliegt, so dass sich, bei Betrachtung aus im Wesentlichen einer Normalenrichtung der Hauptfläche der Polymerelektrolytmembran (1), eine äußere Peripherie der ersten Katalysatorschicht innerhalb einer äußeren Peripherie der zweiten Katalysatorschicht befindet.

2. Katalysator-beschichtete Membran nach Anspruch 1, wobei der Membranbereich (80) mit reduzierter Katalysatorkonzentration so ausgebildet ist, dass eine Katalysatorkonzentration desselben niedriger wird von einem Abschnitt fern der ersten Hauptfläche der Polymerelektrolytmembran (1) zu einem Abschnitt nahe der ersten Hauptfläche.

3. Katalysator-beschichtete Membran nach Anspruch 1, wobei:
der Membranbereich (80) mit reduzierter Katalysatorkonzentration als Materialkomponenten Polymerelektrolyt mit der Wasserstoffionenleitfähigkeit und anorganische Teilchen enthält; und
die anorganischen Teilchen Teilchen sind, die unter einer Betriebsbedingung einer Polymerelektrolyt-Brennstoffzelle chemisch stabil sind und die keine chemischen Spezies erzeugen, die den Polymerelektrolyten zersetzen.

4. Katalysator-beschichtete Membran nach Anspruch 3, wobei die anorganischen Teilchen Teilchen sind, die als Materialkomponente zumindest einen Typ anorganischen Feststoffmaterials, gewählt aus einer aus Carbon und Silica bestehenden Gruppe, enthalten.

5. Katalysator-beschichtete Membran nach Anspruch 1, die weiterhin ein erstes raumfüllendes Element (32) umfasst, das auf der zweiten Hauptfläche der Polymerelektrolytmembran so angeordnet ist, dass es sich außerhalb der zweiten Katalysatorschicht befindet und sich nicht mit der zweiten Katalysatorschicht überlappt, wobei
bei Betrachtung aus einer Normalenrichtung der Hauptfläche der Polymerelektrolytmembran, sich ein innerer Rand des ersten raumfüllenden Elements befindet zwischen dem Rand des Membranbereichs mit reduzierter Katalysatorkonzentration, welcher Rand in Kontakt mit der ersten Katalysatorschicht ist, und dem Rand, der dem mit der ersten Katalysatorschicht in Kontakt befindlichen Rand gegenüberliegt.

6. Katalysator-beschichtete Membran nach Anspruch 5, wobei das erste raumfüllende Element (32) technischen Kunststoff als Materialkomponente enthält.

7. Katalysator-beschichtete Membran nach Anspruch 1 oder 5, die weiterhin ein zweites raumfüllendes Element (43) umfasst, das auf der ersten Hauptfläche der Polymerelektrolytmembran (1) so angeordnet ist, dass es sich außerhalb des Membranbereichs mit reduzierter Katalysatorkonzentration befindet und sich nicht mit dem Membranbereich mit reduzierter Katalysatorkonzentration überlappt.

8. Katalysator-beschichtete Membran nach Anspruch 7, wobei das zweite raumfüllende Element (43) technischen Kunststoff als Materialkomponente enthält.

9. Katalysator-beschichtete Membran nach Anspruch 1, wobei die erste Katalysatorschicht (2a) eine Katalysatorschicht für eine Anode ist, und die zweite Katalysatorschicht (2b) eine Katalysatorschicht für eine Kathode ist.

10. Katalysator-beschichtete Membran nach Anspruch 1, wobei die erste Katalysatorschicht (2a) eine Katalysatorschicht für eine Kathode ist, und die zweite Katalysatorschicht (2b) eine Katalysatorschicht für eine Anode ist.

11. Membran-Elektroden-Anordnung, umfassend:
ein Paar Gasdiffusionsschichten, die so angeordnet sind, dass sie einander gegenüberliegen; und
die Katalysator-beschichtete Membran nach Anspruch 1, angeordnet zwischen dem Paar Gasdiffusionsschichten.

12. Polymerelektrolyt-Brennstoffzelle, umfassend die Membran-Elektroden-Anordnung nach Anspruch 11.

## Revendications

1. Membrane à revêtement catalytique comprenant au moins :
une première couche catalytique (2a) et une seconde couche catalytique (2b) qui sont opposées l'une à l'autre, ladite seconde couche catalytique (2b) comprenant au moins un catalyseur ;
une membrane électrolytique polymère (1) qui est disposée entre ladite première couche catalytique (2a) et ladite seconde couche catalytique (2b), présente une première surface principale et une seconde surface principale qui sont opposées l'une à l'autre, et est disposée de manière que la première surface principale soit en contact avec l'une des surfaces principales de ladite première couche catalytique et la seconde surface principale soit en contact avec l'une des surfaces principales de ladite seconde couche catalytique ; et
une zone de membrane à concentration réduite en catalyseur (80) qui est en contact avec une périphérie extérieure de ladite première couche catalytique (2a) et la première surface principale de ladite membrane électrolytique polymère (1), possède une conductivité des ions hydrogène et une résistance à la chaleur, et est constituée de forme annulaire, dans laquelle
ladite zone de membrane à concentration réduite en catalyseur (80) comprend une première partie (8) qui est en contact avec la première surface principale de ladite membrane électrolytique polymère (1) et possède une conductivité des ions hydrogène et une résistance à la chaleur et une seconde partie (81) qui est la partie restante autre que la première partie (8), possède une conductivité des ions hydrogène et une résistance à la chaleur, et contient un catalyseur ;
selon une vue dans une direction normale des surfaces principales de ladite membrane électrolytique polymère (1), ladite zone de membrane à concentration réduite en catalyseur (80) est formée de manière à présenter une structure bi-couche comprenant la première partie (8) et la seconde partie (81) ;
la première partie (8) ne contient pas le catalyseur ou contient le catalyseur, dont la quantité est telle que le catalyseur n'agit pas eu égard à une réaction d'un gaz réactif qui s'est écoulé dans la première partie ou telle que, même si le catalyseur agit eu égard à la réaction du gaz réactif, la chaleur réactionnelle générée par la réaction ne détériore pas ladite membrane électrolytique polymère ; et
une concentration en catalyseur de la première partie (8) est inférieure à une concentration en catalyseur de la seconde partie (81) et une concentration en catalyseur de ladite première couche catalytique (2a),
**caractérisée en ce qu'**
une périphérie extérieure des surfaces principales de ladite seconde couche catalytique (2b) est située entre un bord de ladite zone de membrane à concentration réduite en catalyseur dont le bord est en contact avec ladite première couche catalytique (2a) et un bord opposé au bord en contact avec ladite première couche catalytique de manière que, selon une vue dans une direction sensiblement normale de la surface principale de la membrane électrolytique polymère (1), une périphérie extérieure de la première couche catalytique se situe à l'intérieur d'une périphérie extérieure de la seconde couche catalytique.

2. Membrane à revêtement catalytique selon la revendication 1, dans laquelle ladite zone de membrane à concentration réduite en catalyseur (80) est formée de manière que sa concentration en catalyseur réduise depuis une partie éloignée de la première surface principale de ladite membrane électrolytique polymère (1) vers une partie proche de la première surface principale.

3. Membrane à revêtement catalytique selon la revendication 1, dans laquelle :
ladite zone de membrane à concentration réduite en catalyseur (80) contient, comme matériaux constitutifs, un électrolyte polymère possédant une conductivité des ions hydrogène et des particules inorganiques ; et
les particules inorganiques sont des particules qui sont chimiquement stables dans les conditions de fonctionnement d'une pile à combustible du type à électrolyte polymère et qui ne génèrent pas d'espèces chimiques décomposant l'électrolyte polymère.

4. Membrane à revêtement catalytique selon la revendication 3, dans laquelle les particules inorganiques sont des particules contenant, comme matériau constitutif, au moins un type de matériau inorganique solide choisi parmi le groupe constitué par le carbone et la silice.

5. Membrane à revêtement catalytique selon la revendication 1, comprenant en outre un premier élément de comblement (32) qui est disposé sur la seconde surface principale de ladite membrane électrolytique polymère de manière à être situé en dehors de ladite seconde couche catalytique et à ne pas être en chevauchement avec ladite seconde couche catalytique, dans laquelle
selon une vue dans une direction sensiblement normale de la surface principale de ladite membrane électrolytique polymère, un bord intérieur dudit premier élément de comblement se situe entre le bord de ladite zone de membrane à concentration réduite en catalyseur dont le bord est en contact avec ladite première couche catalytique et le bord opposé au bord en contact avec ladite première couche catalytique.

6. Membrane à revêtement catalytique selon la revendication 5, dans laquelle ledit premier élément de comblement (32) contient du plastique industriel comme matériau constitutif.

7. Membrane à revêtement catalytique selon la revendication 1 ou 5, comprenant en outre un second élément de comblement (43) qui est disposé sur la première surface principale de ladite membrane électrolytique polymère (1) de manière à se situer en dehors de ladite zone de membrane à concentration réduite en catalyseur et à ne pas être en chevauchement avec ladite zone de membrane à concentration réduite en catalyseur.

8. Membrane à revêtement catalytique selon la revendication 7, dans laquelle ledit second élément de comblement (43) contient du plastique industriel comme matériau constitutif.

9. Membrane à revêtement catalytique selon la revendication 1, dans laquelle ladite première couche catalytique (2a) est une couche catalytique pour une anode, et ladite seconde couche catalytique (2b) est une couche catalytique pour une cathode.

10. Membrane à revêtement catalytique selon la revendication 1, dans laquelle ladite première couche catalytique (2a) est une couche catalytique pour une cathode, et ladite seconde couche catalytique (2b) est une couche catalytique pour une anode.

11. Ensemble membrane-électrode comprenant :
une paire de couches de diffusion gazeuse, chaque couche étant disposée pour être opposée à l'autre ; et
la membrane à revêtement catalytique selon la revendication 1 disposée entre les couches de ladite paire de couches de diffusion gazeuse.

12. Pile à combustible du type à électrolyte polymère, comprenant l'ensemble membrane-électrode selon la revendication 11.
